(19) Europäisches Patentamt
European Patent Office
Office européen des brevets

(11) **EP 2 718 231 B1**

(12) **EUROPEAN PATENT SPECIFICATION**

(45) Date of publication and mention
of the grant of the patent:
**10.08.2016 Bulletin 2016/32**

(21) Application number: **12735956.0**

(22) Date of filing: **08.06.2012**

(51) Int Cl.:
*C01G 45/00* [(2006.01)]     *B01J 20/00* [(2006.01)]
*B01J 20/06* [(2006.01)]     *B01J 20/28* [(2006.01)]
*B01D 35/02* [(2006.01)]     *B01J 20/30* [(2006.01)]
*B01J 23/34* [(2006.01)]     *B01D 53/86* [(2006.01)]
*B01D 53/02* [(2006.01)]     *B82Y 30/00* [(2011.01)]
*C02F 1/28* [(2006.01)]     *C02F 1/72* [(2006.01)]
*C02F 101/18* [(2006.01)]     *C02F 101/30* [(2006.01)]
*C02F 101/20* [(2006.01)]     *C02F 101/34* [(2006.01)]

(86) International application number:
**PCT/IT2012/000172**

(87) International publication number:
**WO 2012/168957 (13.12.2012 Gazette 2012/50)**

(54) **NANO-STRUCTURED COMPOSITE MATERIALS BASED ON COMPOSITIONS OF MANGANESE AND CERIUM, USABLE AS OXIDATION CATALYSTS AND/OR MOLECULAR ADSORBERS**

NANOSTRUKTURIERTE VERBUNDSTOFFE AUF DER BASIS VON ZUSAMMENSETZUNGEN AUS MANGAN UND CER ALS OXIDATIONSKATALYSATOREN UND/ODER MOLEKULARE ADSORBER

MATÉRIAUX COMPOSITES NANOSTRUCTURÉS À BASE DE COMPOSITIONS DE MANGANÈSE ET DE CÉRIUM, UTILISABLES EN TANT QUE CATALYSEURS D'OXYDATION ET/OU ADSORBEURS MOLÉCULAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2011 IT RM20110292**

(43) Date of publication of application:
**16.04.2014 Bulletin 2014/16**

(73) Proprietor: **Eco-Rigen S.R.L.**
**03012 Gela Centro (CI) (IT)**

(72) Inventors:
 • **ARENA, Francesco**
  **98168 Messina (IT)**
 • **SPADARO, Lorenzo**
  **98126 Messina (IT)**

(74) Representative: **Santi, Filippo et al**
**Barzanò & Zanardo Roma S.p.A.**
**Via Piemonte 26**
**00187 Roma (IT)**

(56) References cited:
**WO-A1-2007/069238**     **US-A1- 2003 166 987**

 • **F. ARENA ET AL.: "Basic evidence of the molecular dispersion of MnCeOx catalysts synthetized via a novel "redox precipitation" route", CHEMISTRY OF MATERIALS, vol. 19, 3 February 2007 (2007-02-03), pages 2269-2276, XP002666679, cited in the application**
 • **F. ARENA ET AL.: "Nanosize effects, Physiochemical properties and catalytic oxidation pattern of the redox-precipitated MnCeOx system", JOURNAL OF PHYSICAL CHEMISTRY C, vol. 113, 26 January 2009 (2009-01-26), pages 2822-2829, XP002666680,**
 • **ARENA ET AL: "Synthesis of highly dispersed MnCeOx catalysts via a novel "redox-precipitation" route", MATERIALS RESEARCH BULLETIN, ELSEVIER, KIDLINGTON, GB, vol. 43, no. 3, 30 January 2008 (2008-01-30), pages 539-545, XP022441585, ISSN: 0025-5408, DOI: 10.1016/S0965-9773(99)00135-X cited in the application**

**(Cont. next page)**

- ARENA F ET AL: "Optimization of the MnCeOx system for the catalytic wet oxidation of phenol with oxygen (CWAO)", APPLIED CATALYSIS B: ENVIRONMENTAL, ELSEVIER, AMSTERDAM, NL, vol. 85, no. 1-2, 17 December 2008 (2008-12-17), pages 40-47, XP025693229, ISSN: 0926-3373, DOI: 10.1016/J.APCATB.2008.06.020 [retrieved on 2008-07-01]

**Description**

The present invention concerns nano-structured composite material based on compositions of manganese and cerium, in particular for use in processes for the removal of pollutants.

More in detail the invention concerns materials of the said kind, for the application as catalysts in processes for the removal of pollutants which are presents in liquid or gas phases, through adsorption and oxidation.

Still more in detail, the invention refers to the realisation of a new class of nano-structured catalytic compositions, based on sub-stoichiometric vitreous compounds (sub-oxides) of manganese (Mn) and ultrafine crystalline nanoparticles (i. e. with a diameter comprised in the range 1-6nm) of compounds of cerium (Ce), which can be used in the envoronmental field as redox catalysts, adsorbing materials and heavy metals blasts.

As it is known, at present, liquid phase oxidation process, mainly concerning the treatment of wastewaters of a special type [Catalysis Today, vol. 53 (1999) p. 81], wherein by special are intended wastewaters having an industrial or civil origin and containing toxyc compounds and/or compounds which are refractory to common processes of biological depuration, are at the center of a strong scientific and technologic activity worldwide.

To date, the oxidative treatments applied to the wastewaters of industrial origin, using oxygen/air as oxidizing agent, are conducted at generally high temperatures and pressures. Other kinds of treatments exist in presence of chemical oxidants (such as for example $H_2O_2$, $O_3$, $KMnO_4$) which allow to work in less critical conditions, but such oxidants appear to be very expensive. All these treatments are necessary for the mineralization of organic and inorganic compounds which are poorly biodegradable and which, therefore, would be toxic to flora and fauna, but have the drawback of being very costly in terms of investment, fixed and operative costs [Catalysis Today, vol. 53 (1999) p. 81].

To solve this problem, i. e. to obtain a significant mitigation of the operating conditions of the oxidative processes using air/oxygen and a overall improvement of their efficiency and costs the use of suitable solid catalysts was proposed [Ind. Eng. Chem. Res., vol. 27 (1988) p. 718]. The use of these catalysts promotes the kinetics of the oxidation reactions of the pollutants, thus enabling the conduction of the processes in milder conditions of temperature and pressure and considerably reduced residence times compared to the non-catalytic processes [Chem. Eng. Journal, vol. 73 (1999) p. 149].

In this context, the heterogeneous catalysts based on noble metals (Pt, Pd, Ru, Rh, ecc.) supported on refractory oxides such as alumina, silica, titania, ceria, more and mixtures thereof, exhibit greater activity in the oxidation of various types of pollutants, and in in particular in relation to organic polymers (PEG), phenolic compounds, acetic acid and ammonia [Ind. Eng. Chem. Res., vol. 37 (1998) p. 309].

However, besides being very expensive, these materials are generally sensitive to deactivation phenomena such as fouling, sintering and leaching of the active phase. To these phenomena, it is also added the poisoning of active sites, caused by the adsorption on the catalyst of pollutants and decomposition products thereof, which irreversibly impair the efficiency and chemical stability thereof [Ind. Eng. Chem. Res., vol. 37 (1998) p. 309].

In parallel, several studies have shown that catalysts based on copper oxides or other non-noble metals (e.g. Co, Zn and Ti) were efficient and reactive in oxidation reactions of phenol in liquid phase with air/oxygen (CWAO) at temperatures comprised between 160 and 250°C.

Imamura et al. [Ind. Eng. Chem. Res., vol. 38 (1999) p. 1743] proposed catalytic systems based on the combination of manganese, cerium, cobalt and bismuth oxides specifically conceived to increase the efficiency of oxidation in liquid phase of several kinds of pollutants. Catalytic systems based on manganese and cerium oxides denote oxidising properties in respect of phenol at a temperature of 150°C.

Hocevar et al. [Journal of Catalysis, vol. 184 (1999) p. 39] described a further advancement in the development of catalysts that are active in the processes of oxidation of phenol in liquid phase with air/oxygen, proposing catalytic systems based on oxides of copper and cerium prepared by coprecipitation. These catalysts, which are stabilized by means of treatments of calcination at high temperature (900°C), show a good resistance to the phenomena of poisoning (poisoning) by organic polymers.

Hocevar et al. [Applied Catalysis, B: Environmental, vol. 28 (2000) p. 113] have subsequently improved the catalytic systems based on oxides of copper and cerium using the sol-gel preparative methodology.

Arena et al. [Applied Catalysis, B: Environmental, vol. 45 (2003) p. 51] have subsequently shown that the activity of catalysts based on oxides of copper and cerium derived actually from the action in homogeneous phase of the $Cu^{2+}$ ions released into solution by the same catalyst in the initial stages of the reaction.

Santos et al. [Environmental Science and Technology, vol. 38 (2004) p. 133] have shown that, in order to use the copper catalysts, obviating the phenomena of leaching, it was possible to conduct the reaction of oxidation of phenol in liquid phase with air/oxygen under basic pH (>8), through the use of carbonate/bicarbonate buffers. However, by adopting basic pH it was achieved only a partial reduction of the toxicity of the effluent due to the presence of phenols, but not the mineralization of the organic load.

Furthermore, it was demonstrated that the catalysts based on oxides of manganese and cerium operate the mineralization of phenol at temperatures below 250°C and oxygen partial pressures lower than 50atm, presenting anyway phenomena of deactivation due to fouling of the adsorbed species [Ind. Eng. Chem. Res., vol. 43 (2004) p. 5089.].

Imamura et al. [Ind. Eng. Chem. Prod. Res. Dev. 24, (1985) p.75] described the preparation of a composite material based on manganese oxide and cerium oxide obtained by coprecipitation of manganese and cerium, in the form of their respective hydroxides and/or oxides, from a solution, using sodium hydroxide. The precipitate was removed from the solution of precipitation, and calcined at 350 °C to obtain the catalyst.

WO 2001/45833 describes various catalytic compositions based on cerium oxide.

US 2003/0166987 describes the preparation of catalysts based on oxides of manganese and cerium to be used in the destruction of organic compounds in liquid phase, obtained by coprecipitation and subsequent heat treatment at a temperature between 100 and 500°C. The catalyst was identified as a crystalline material characterized by a particle size of 30-7000 nm and total surface area of 60-120 $m^2$/g.

US 2004/0192947 describes the preparation of a catalyst consisting of an array of minerals and, more specifically, a silica matrix containing in its interior some particles of metal oxides.

Larachi [Topics in Catalysis, vol. 33, n. 1-4, p. 109-134 (2005)] describes the application of the oxides of manganese in the oxidative catalysis in liquid phase (CWO).

WO2007/069238 claims a new methodology allowing for the preparation of catalysts consisting of a mixture of $Mn_2O_3$ and $CeO_2$ with high degree of crystallinity and greater total surface area (i.e. 200-300 $m^2$/g), prepared by alkaline co-precipitation of ions of cerium and manganese within a meso-porous matrix (type SBA), calcination of the system at high temperature (700 °C) and subsequent dissolution of the same matrix by etching in alkaline solution (nanocasting).

Arena et al. ["Optimization of the MnCeOx system for the catalytic wet oxidation of phenol with oxygen (CWAO)", Applied Catalysis B: Environmental, Elsevier, Amsterdam, NL, vol. 85, no. 1-2, 17 December 2008 (2008-12-17). Pages 40-47, XP025693229] disclose a MnCeOx system for the catalytic wet oxidation of phenol with oxygen.

Arena et al. ["Basic evidence of the molecular dispersion of MnCeOx catalysts sybthetized via a novel "redox precipitation" route", Chem. Mater., Vol. 19, 3 February 2007 (2007-02-03) p. 2269-2276, XP002666679] describe a nanostructured composite oxide comprising domains of crystalline ceria having a size of 3 to 5 nm embedded in a prevalently amorphous MnOx matrix and the preparation of catalysts based on highly dispersed oxides of manganese and cerium obtained by alkaline coprecipitation of tetravalent cerium and manganese ($Ce^{4+}$ and $Mn^{4+}$) generated in situ by oxidation of salts of trivalent cerium ($Ce^{3+}$) and divalent manganese ($Mn^{2+}$) with potassium permanganate ($KMnO_4$), which are active in the reaction of oxidation of phenol in liquid phase [Ind. Eng. Chem. Res. Vol. 46 (2007) p. 6724] ["Synthesis of highly dispersed MnCeOx catalysts via a novel "redox precipitation" route", Materials Reseacrh Bulletin, Elsevier, Kidlington, GB, vol. 43, no. 3, 30 January 2008 (2008-01-30), pages 539-545, XP022441585].

Arena et al. ["Nanosize effects, Physiochemical properties and catalytic oxidation patterns of the redox-precipitated MnCeOx system", Journal of Physical Chemistry C, vol 113, 26 January 2009 (2009-01-26), pages 2822-2829, XP002666680] disclose cerium and manganese based composite oxides displaying nanosized ceria domains having a size of less than 5 nm embedded in a prevalently amorphous manganese (sub)oxide matrix.

From the foregoing reasoning it follows that, to date, the catalysts based on oxides of manganese and cerium are industrially prepared by conventional co-precipitation [US 2003/0166987]. The structure of the catalysts based on oxides of manganese and cerium prepared by coprecipitation is the result of a process of chaotic, therefore, not controllable, aggregation of matter. The technique of co-precipitation does not allow to structure the material at a nano-size level. Rather, this technique only allows to obtain catalysts based on oxides of manganese and cerium in which the metastable phase is constituted of a sub stoichiometric amorphous manganese oxide matrix.

At present, therefore, the technique of co-precipitation can not check favorably the dispersion of the different elements and/or solid phases nor the extent of the total surface area and porosity of the material.

In light of the above, it is evident the need to achieve catalytic compositions with improved structural properties and new materials with improved chemical and physical properties that can be advantageously used in the removal of molecules highly polluting and difficult to remove.

In this context it is included the solution according to the present invention, which aims to provide nano-structured catalytic compositions comprised of sub-stoichiometric vitreous compounds of manganese and of ultrafine nanoparticles of compounds of cerium highly active in the removal of pollutants which are presents in liquid or gas phases, through adsorption and oxidation, as well as a process for their preparation.

Objective of the present invention is therefore the realization of innovative nano-structured catalytic compositions, comprised of:

- at least one sub-stoichiometric vitreous compound of manganese (Mn), said sub-stoichiometric oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn;
- at least one compound of cerium (Ce) in the form of ultrafine crystalline nanoparticles (diameter 1-10nm preferably 1-6 nm),

which can be used in processes of decontamination of liquid and gaseous effluents, as redox catalysts and/or as adsorbing filters.

In particular, the process of preparation of the new nano-structured catalytic compositions according to the present invention allows to favorably control the size of the crystallites of the compounds of cerium, to the benefit of the activity of oxidation.

Moreover, the process of preparation of the new nano-structured catalytic compositions according to the present invention allows to favorably control the extension of the the total surface area and the porosity of the compositions themselves, to the benefit of the property of adsorption.

Still, the process of preparation of the new nano-structured catalytic compositions according to the present invention allows to favorably control the dispersion of the various components that are present in the same compositions, to the benefit of the chemical reactivity and of the catalytic activity in the processes of oxidation in presence of air/oxygen.

Furthermore, according to a preferred aspect of the present invention, it is proposed the addition of some metals (such as for example V, Ti, Cr, Fe, Cu, Zn, Sn, Ga, Gd, Y, Zr, Al, Si, K, Li, Pb, Cs) within the nano-structured catalytic compositions comprised of sub-stoichiometric vitreous compounds of manganese and ultrafine nanoparticles of compounds of cerium according to the present invention, in order to improve their performance in the processes of adsorption and oxidation.

This and other results are obtained according to the present invention proposing a nano-structured composite material with catalytic properties with optimal characteristics with respect to: pore size, extension of the active surface, position and, therefore, accessibility, of the active sites, and selectivity of the active sites themselves.

The purpose of the present invention is therefore that of proposing a nano-structured composite material based on compositions of manganese and cerium, which allows to overcome the limits of the solutions according to the prior art and to achieve the previously described technical results.

Further object of the invention is that said material can be produced with substantially low costs, as far as both the production costs and the maintenance costs is concerned.

Not last object of the invention is that of realising a nano-structured composite material which is substantially simple, safe and reliable in its use as catalyst and/or adsorbing filter.

It is therefore a first specific object of the present invention a nano-structured composite material based on compositions of manganese and cerium, as defined in claim 1.

A second and a third specific object of the present invention consist of two processes of production of said material.

It is then a fourth specific object of the present invention the use of said material as catalyst and/or adsorbing filter in the processes of removal of highly polluting molecules which are difficult to remove.

Finally, it is a fifth specific object of the present invention a process for the removal of pollutants by means of said material.

Class of the catalytic materials according to the present invention

Without whishing to be bound by theory, it is believed that the catalysts forming object of the present patent constitute a new class of nanostructured materials, since they are obtained by means of an original and controlled process of aggregation and structuring of basic nanoscopic unit having the function of building blocks.

Moreover, without whishing to be bound by theory, it is believed that the structure of the catalysts forming object of the present invention is original and completely innovative compared to that of the catalysts according to the prior art, since, to date, there are no examples of nanostructured catalysts based on sub-stoichiometric vitreous compounds (sub-oxides) of manganese (Mn), comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine crystalline nanoparticles (i. e. with diameter comprised between 1 and 10nm, preferably between 1 and 6nm) of compounds of cerium (Ce).

Chemical composition of the catalytic materials according to the present invention

It is an object of the present invention the realisation of innovative nano-structured catalytic compositions, comprised of:

- at least one sub-stoichiometric vitreous compound of manganese (Mn), comprising $MeMnO_z$ manganates, wherein $1 \leq z \leq 4$, Me being constituted of one or more elements selected amongst alkali metals, alkaline earth metals, transition metals and rare earths, with the exception of Mn;
- at least one compound of cerium (Ce) in the form of ultrafine crystalline nanoparticles (diameter 1-10nm preferably 1-6nm).

Without whishing to be bound by theory, it is believed that the synergistic role shown by the two compounds (i. e. Mn and Ce) in the compositions forming the object of the present invention promotes the processes of electronic and ionic transfer (i.e. $O^{2-}$) in redox processes, improving the catalytic performances of the compositions themselves.

In the context of the present invention, the expression "at least one compound of manganese" is intended to designate one or more than one compounds of manganese (Mn). Mixtures of more compounds of manganese (Mn) can be conveniently used for the purposes of the invention.

Herein below, the expression "compound of manganese" is intended, for the purposes of the present invention, in both plural and singular form, i. e. the inventive chemical formulation can comprise one or more than one compounds of manganese (Mn).

The term compound of manganese (Mn) is intended to designate any compound in which at least one atom of manganese is present, regardless of its valence state.

Therefore, the compound of manganese can comprise $MeMnO_z$ manganates, wherein $1 \leq z \leq 4$, Me being constituted of one or more elements selected amongst alkali metals, alkaline earth metals, transition metals and rare earths, with the exception of Mn, and said manganates can comprise bivalent manganese (MnII), trivalent manganese (MnIII), tetravalent manganese (MnIV), exavalent manganese (MnVI) and eptavalent manganese (MnVII), and can also comprise mixtures thereof.

The use of the manganates in the catalytic composition according to the present invention can be considered convenient if it is present in an amount of at least 25%, more preferably at least 35%, still more preferably at least 45%, with respect to the total weight of the catalytic composition. The maximum amount of manganates will not be limited with respect to the total weight of the catalytic composition; in general a maximum amount of this compound of 75%, more preferably of 65%, still more preferably of 55 % will be considered convenient.

The compound of manganese (Mn) acts as a catalytically active phase in reactions of oxidation and reduction of both organic and inorganic compounds, whether they are present in gas or liquid phase or in both phases.

In accordance with a preferred embodiment of the present invention the compound of manganese (Mn) is a vitreous mixture of several substoichiometric oxides (sub-oxides) of manganese comprising $MeMnO_z$ manganates, wherein $1 \leq z \leq 4$, Me being constituted of one or more elements selected amongst alkali metals, alkaline earth metals, transition metals and rare earths, with the exception of Mn.

In particular, said vitreous mixture of sub-stoichiometric oxides (sub-oxides) of manganese may incorporate ions of other chemical elements different from manganese (hetero-ions), i. e. the cations of the elements Ce, V, Ti, Cr, Fe, Cu, Zn, Sn, Ga, Gd, Y, Zr, Al, Si, La, K, Li, Pb, Cs, or mixtures thereof.

Amongst said hetero-ions, the elements titanium (Ti), zirconium (Zr) and cerium (Ce) are more preferred, the elements Zr and Ce are still more preferred; Ce is still more preferred, both in the trivalent state ($Ce^{III}$) and in the tetravalent state ($Ce^{IV}$) or even mixtures thereof.

In particular, then, the content of cations incorporated into the vitreous mixture of sub-oxides of manganese can be considered convenient if at least equal to 1%, more preferably at least 5%, still more preferably at least 10%, of the total weight of the compound of manganese (Mn). The maximum amount of cations incorporated into the compound of manganese (Mn) will not be limited with respect to the total weight of the same compound; in general an amount of incorporated hetero-elements at the maximum equal to 35%, more preferably at the maximum 25%, still more preferably at the maximum 15% will be considered convenient.

In the context of the present invention the expression "at least one compound of cerium" is intended to designate one or more than one compounds of cerium (Ce). Mixtures of more compounds of cerium (Ce) can be conveniently used for the purposes of the invention.

In the remaining part of the text, the expressions "compound of cerium" are intended, for the purposes of the present invention, in both plural and singular form, i. e. the inventive chemical formulation can comprise one or more than one compound of cerium (Ce).

The term compound of cerium is intended to designate any compound wherein at least one atom of cerium is present, regardless of its state of valence. Therefore, the compound of cerium can comprise both trivalent cerium ($Ce^{III}$) tetravalent cerium ($Ce^{IV}$), or can even comprise mixtures thereof.

The compound of cerium can act in the catalytic composition at the same time as a co-catalyst (co-active phase) and support, being used in a greater amount, according to a first preferred embodiment, or can be used as electronic/structural promoter, in addition to other inorganic promoters, being used in a limited amount, according to a second preferred embodiment.

The amount of the compound of cerium in the catalytic composition will be conveniently chosen on the base of the function (first or second preferred embodiment) that this compound will have in the catalytic composition.

According to the first preferred embodiment of the invention, the compound of cerium will be used at the same time both as co-catalyst (co-active phase) and as inorganic support, being greater in the presence in the catalytic composition.

According to the first preferred embodiment of the invention, the use of the compound of cerium in the catalytic composition can be considered convenient if thit is present in an amount of at least 20%, more preferably at least 30%, still more preferably at least 50%, with respect to the total weight of the catalytic composition. The maximum amount of the compound of cerium will not be limited with respect to the total weight of the catalytic composition; in general will be considered convenient an amount of this compound at the maximum equal to 85%, more preferably at the maximum 70%, still more preferably at the maximum 60%.

According to the first preferred embodiment, it is preferred that the compound of cerium is a nanocrystalline oxide, e.g. nanocrystalline $CeO_2$ or nanocrystalline $Ce_2O_3$ or a mixture of the two nanocrystalline compounds.

According to the second preferred embodiment of the invention, the compound of cerium will be used as electronic/structural promoter, in combination with other inorganic promoters.

According to the second preferred embodiment of the invention, the use of the compound of cerium in the catalytic composition can be considered convenient if thit is present in an amount of at least 2%, more preferably at least 5%, still more preferably at least 10%, with respect to the total weight of the catalytic composition. The maximum amount of the compound of cerium will not be limited with respect to the total weight of the catalytic composition; in general, an amount of at the maximum 40%, more preferably 35%, still more preferably 20% will be considered convenient.

According to the second preferred embodiment the compound of cerium can be chosen in particular amongst oxides ($CeO_2$; $Ce_2O_3$), ceric peroxide ($Ce-H_2O-O_2$), ceric fluoride ($CeF_4$), ceric sulphate [$Ce(SO_4)_2$], ceric ammonium nitrate [$(NH_4)_2Ce(NO_3)_6$], ceric ammonium sulphate [$(NH_4)_2Ce(SO_4)_3$], hexa-chloro ceric ammonium [$(NH_4)_2CeCl_6$], cerous peroxide [$Ce-H_2O-H_2O_2$], cerous basic carbonate [$CeOHCO_3$], cerous hydroxide [$Ce(OH)_3$], cerous carbonate [$Ce_2(CO_3)_3 \cdot nH_2O$], cerous oxycarbonate [$Ce_2O_2(CO_3)$], cerous phosphate [$CePO_4 \cdot H_2O$], cerous fluoride [$CeF_3$], cerous oxyfluoride [$CeOF$], cerous sulphate [$Ce_2(SO_4)_3$], cerous sulfide [$Ce_2S_3$], cerium oxysulfide [$Ce_2O_2S$], cerous nitrate [$Ce(NO_3)_3 \cdot 6H_2O$], cerous chloride [$CeCl_3$], cerous oxychloride [$CeOCl$], cerous bromide [$CeBr_3$] and mixtures thereof.

The catalytic composition can comprise, in addition to the compound of manganese (Mn) or to the compound of cerium (Ce), some additional components.

For example, according to the realisation of the vitreous mixture of sub-oxides of manganese, the compound of manganese (Mn) can incorporate additional components such as alkali metals, alkaline earth, transition and rare earths. In particular, components containing Ce, V, Ti, Cr, Fe, Cu, Zn, Sn, Ga, Gd, Y, Zr, Al, Si, K, Li, Cs, or mixtures thereof can be added to the compound of manganese.

According to the second preferred embodiment of the invention, the compound of cerium (Ce) comprises at least one electronic/structural promoter chosen amongst the oxides of metallic or semi-metallic elements different from the compound of cerium.

For preferred but not limitative purposes, the so-called promotor (compound P) will be preferably chosen amongst alumina, silica, titania, germania, zirconia, aluminosilicates, zirconil-silicates, chromium oxides, copper oxides, molybdenum oxides, tantalum oxides, zinc oxides, yttrium oxides, vanadium oxides, iron oxides and mixtures thereof.

It is believed, without this limiting the scope of the invention, that the addition of the additional components to the compound of manganese (Mn) may favorably modify the properties of chemisorption of the surface, increasing the interfacial area of the catalytic phase, improve the acid-base properties of the catalytic element.

It is considered, witout this limiting the scope of the invention, that the correct combination of the compound of cerium with one or more than one compounds of metallic or semi-metallic oxide can modify in a substantial way the structural properties of the catalyst, increasing *in primis* the extension of the total surface area, the resistance of the catalyst to sinterisation and to poisoning, as well as the properties of mechanical resistance.

Method of preparation of catalytic materials/adsorbents according to the present invention

Another object of the present invention is the process of production of the proposed catalytic materials.

The manufacture of the materials is realized by executing a precise method of preparation, which sees the preparation and the appropriate mixing of the following solutions:

    i) reducing solution,
    ii) oxidising solution,
    iii) alkaline solution, and
    iv) solution of promoters.

The method of preparation requires control of the following experimental parameters:

-   temperature,
-   pH,
-   concentration of the oxidizing and reducing species,
-   redox potential of the solutions,

- basic strength of the alkaline agent,
- concentration and ratio of manganese and cerium salts,
- state of valence of the metal precursors,
- titration rate,
- mixing speed,
- aging time, and
- ionic strength of the solution.

The term reducing solution is intended to designate a solution obtained by dissolution, in water or in a water/solvent mixture, of salts and soluble compounds of divalent manganese (Mn"), trivalent cerium (Ce$^{III}$) and other metallic elements (Me) capable of generating redox couples [Me$^{X+}$ → n·e$^-$ Me$^{(x+n)+}$]. For exemplificative but non limitative purposes, amongst the chemical elements capable of generating redox couples the following may be cited:

$$Mn^{2+} \rightarrow 2e^- Mn^{4+}$$

(basic elements)

$$Ce^{3+} \rightarrow e^- Ce^{4+}$$

$$Ti^{3+} \rightarrow e^- Ti^{4+}$$

(additional elements)

$$V^{3+} \rightarrow 2e^- V^{5+}$$

$$Fe^{2+} \rightarrow e^- Fe^{3+}$$

$$Cr^{3+} \rightarrow 3e^- Cr^{6+}$$

$$Mo^{3+} \rightarrow 2e^- Mo^{5+}$$

$$Pt^{2+} \rightarrow 2e^- Pt^{4+}$$

$$Sn^{2+} \rightarrow 2e^- Sn^{4+}$$

$$Pb^{2+} \rightarrow 2e^- Pb^{4+}$$

and more.

The reducing solution always contains ions in the reduced state of the redox couple (Me$^{X+}$).

For the preparation of the reducing solution various salts and soluble compounds (precursors) of manganese (Mn) can be used. For exemplificative but non limitative purposes as precursor agents of manganese the following can be cited: manganous sulphate ($MnSO_4$), manganous nitrate ($Mn(NO_3)_2$) manganous fluoride ($MnF_2$), manganous chloride ($MnCl_2$), manganous bromide ($MnBr_2$), manganous iodide ($MnI_2$), manganous carbonate ($MnCO_3$), manganese-ous formate ($Mn(HCOO)_2$), manganese-ous acetate ($Mn(CH_3COO)_2$), manganese-ous acetylacetonate ($Mn(C_5H_7O_2)_2$), manganese-ous phtalocianina, and more.

As a precursor of manganese (Mn) for the preparation of the reducing solution it is preferable to use manganous chloride ($MnCl_2$), more preferably manganous acetate ($Mn(CH_3COO)_2$), still more preferably manganous nitrate ($Mn(NO_3)_2$).

For the preparation of the reducing solution various salts and soluble compounds (precursors) of cerium III ($Ce^{3+}$) can be used. For exemplificative but non limitative purposes as precursor agents of cerium (Ce) the following can be cited: cerous peroxide [$Ce-H_2OH_2O_2$], cerous basic carbonate [$CeOHCO_3$], cerous hydroxide [$Ce(OH)_3$], cerous carbonate [$Ce_2(CO_3)_3 \cdot nH_2O$], cerous oxy-carbonate [$Ce_2O_2(CO_3)$], cerous phosphate [$CePO_4 \cdot H_2O$], cerous fluoride [$CeF_3$], cerous oxy-fluoride [$CeOF$], cerous sulphate [$Ce_2(SO_4)_3$], cerous sulfide [$Ce_2S_3$], cerous nitrate [$Ce(NO_3)_3 \cdot 6H_2O$], cerous chloride [$CeCl_3$], cerous oxy-chloride [$CeOCl$], cerous bromide [$CeBr_3$] and mixtures thereof.

As a precursor of cerium (Ce) for the preparation of the reducing solution it is preferable to use cerous chloride [$CeCl_3$], cerous sulphate [$Ce_2(SO_4)_3$] or hydrate cerous nitrate [$Ce(NO_3)_3 \cdot 6H_2O$], more preferably cerous sulphate [$Ce_2(SO_4)_3$] or hydrate cerous nitrate [$Ce(NO_3)_3 \cdot 6H_2O$], still more preferably hydrate cerous nitrate [$Ce(NO_3)_3 \cdot 6H_2O$].

The term oxidising solution is intended to designate a solution obtained by dissolving strong oxidizing chemical compounds in water. For exemplificative but non limitative purposes of strong oxidising chemical compounds the following can be cited:

$$Ce^{4+}/Ce^{3+} \qquad E° = 1.44V @ 25°C$$
$$MnO^{4-}/MnO_2 \qquad E° = 1.63V @ 25°C$$
$$H_2O_2/H_2O \qquad E° = 1.77V @ 25°C$$
$$S_2O_8{}^{2-}/SO_4{}^{2-} \qquad E° = 2.01V @ 25°C$$

As oxidizing agent for the preparation of the oxidising solution it is preferable to use hydrogen peroxide ($H_2O_2$), potassium permanganate ($KMnO_4$) or a mixture of potassium permanganate ($KMnO_4$) and ceric ammonium nitrate [$(NH_4)_2Ce(NO_3)_6$], more preferably potassium permanganate ($KMnO_4$) or a mixture of potassium permanganate ($KMnO_4$) and ceric ammonium nitrate [$(NH_4)_2Ce(NO_3)_6$], still more preferably a mixture of potassium permanganate ($KMnO_4$) and ceric ammonium nitrate [$(NH_4)_2Ce(NO_3)_6$].

With the term alkaline solution it is intended to designate a solution obtained by dissolving an alkaline agent in water. For exemplificative but non limitative purposes as alkaline agents (inorganic and organic bases) the following can be cited: LiOH, NaOH, KOH, RbOH, CsOH, $NH_4OH$, $Ca(OH)_2$, $Ba(OH)_2$, ammonium hydroxide ($NH_4OH$) carbonates and bicarbonate (of Na, K, Li, Cs, Mg, Ca, etc.), amines, pyridine, urea and all the inorganic and organic compounds capable of generating OH- ions in solution.

As an alkaline agent it is preferable to use sodium hydroxide (NaOH), ammonium hydroxide ($NH_4OH$) or potassium hydroxide (KOH), more preferably ammonium hydroxide ($NH_4OH$) or potassium hydroxide (KOH), still more preferably potassium hydroxide (KOH).

With the term solution of promoters it is intended to designate a solution obtained by dissolution, in water or in a water/solvent mixture, of salts and soluble compounds (precursors) of electronic/structural promoting elements. The elements will be selected on a case by case basis in relation to their ability to give precipitates of stable hydroxides, oxides, carbonates and hydroxy-carbonates. For exemplificative but non limitative purposes, as possible promoting elements the following can be cited: Zr, Al, Si, Cu, Zn, Ga, Gd, Y, La, V, Mo and more. Ions of the promoting elements will have a stable state of valence, i. e. will not undergo oxidation or reduction by the reducing mixture or the oxidising mixture.

As precursors of the elements designated for the preparation of the solution of promoters it is preferable in general to use chlorides ($Cl^-$), sulfates ($SO_4{}^{2-}$) or nitrates ($NO_3{}^-$), more preferably sulfates ($SO_4{}^{2-}$) or nitrates ($NO_3{}^-$), still more preferably nitrates ($NO_3{}^-$).

A first preferred embodiment of the method of preparation of the catalytic compositions forming object of the present invention provides for the simultaneous reduction/oxidation/precipitation of the designated metals and semi-metals, performed in a particular basic solution (pH>7) with high oxidizing potential (E > +0.80V).

According to the first preferred embodiment of the method of preparation (protocol m1), the manufacture of the catalytic compositions forming object of the present invention provides for the following steps:

a) preparation, in accordance with precise weight ratios, of the reducing, oxidising, alkaline solutions and in case of the solution of promoters;
b) mixing the reducing solution with the solution of promoters until obtaining a new solution defined solution A;
c) mixing the oxidising solution with the alkaline solution, until obtaining a new solution defined solution B;
d) adding a little at a time, in a slow and continuous way, solution A to solution B, producing the precipitation of metals/semimetals under stirring, keeping constant pH, redox potential of the mixture B and rate of administration of the solution A;
e) ageing and thickening the precipitate and subsequent removal of the precipitate from the solution "titrant environment" by filtration;
f) washing filtrate and subsequent drying at 100°C,
g) final consolidation of the structures of the precipitates and decomposition of any salts/hydroxides/carbonates/hydroxy-carbonates by thermal treatment, according to a precise protocol of calcination.

A second preferred embodiment of the method of preparation of the catalytic compositions forming object of the present invention provides for the simultaneous reduction/oxidation/precipitation of the designated metals and semi-metals, performed in a particular slightly acid solution ($4 \leq pH \leq 5$) with high reducing potential (E < 0.70V).

According to the second preferred embodiment of the method of preparation (protocol m2), the manufacture of the catalytic compositions forming object of the present invention provides for:

a) preparation, in accordance with precise weight ratios, of the reducing and the oxidising solutions, and in case of the solution of promoters;

b) mixing the oxidising solution with the solution of promoters until obtaining a new solution defined A';

c) adding a little at a time, in a slow and continuous way, solution A' to the reducing solution, producing the precipitation of the metals/semi-metals under stirring, keeping constant pH, redox potential of the reducing solution and the rate of administration of the solution A';

d) ageing and thickening the precipitate and subsequent removal of the precipitate from the solution "titrant environment" by filtration;

e) washing filtrate and subsequent drying a 100°C;

f) final consolidation of the structures of the precipitates and decomposition of any salts/hydroxides/carbonates/hydroxy-carbonates by thermal treatment, according to a precise protocol of calcination.

Without whishing to be bound by theory, it is believed that the presence of an oxidizing agent during precipitation of the cerium ion favors the formation of ultrafine nanocrystalline ceria ($CeO_2$), since the oxidation "out spheres" of the trivalent cerium ($Ce^{III}$) ions in solution by the oxidizing agent leads to the formation of tetravalent cerium ($Ce^{IV}$) which is extremely reactive, therefore, able to extract more easily the oxygen of the hydroxide present in the first sphere of solvation, leading to the immediate formation of ultrafine crystalline nanoparticles (diameter 1-6nm) of $CeO_2$, as shown in the following reaction scheme:

$$[oxy]_{aq}+[Ce^{3+}]_{aq}+nOH^- \rightarrow |[oxy]_{aq}{}^- \leftarrow e^- \leftarrow [Ce^{3+}]_{aq} \cdot (OH^-)_n| \rightarrow \rightarrow CeO_2\downarrow+[rid]_{aq}+2H_2O+(n-4)OH^-$$

wherein:

$[oxy]_{aq}$ is the oxidizing agent coordinated in water,
$[rid]_{aq}$ is the oxidizing agent that after transfer of an electron is in turn reduced.

Without whishing to be bound by theory, it is believed that the simultaneous presence of the divalent ion of manganese ($Mn^{II}$), of metal ions capable of generating redox couples $[Me^{X+} \rightarrow ne^- Me^{(X+n)+}]$ and of a a strong oxidizing agent promotes the formation of sub-oxides of manganese, which promotes the formation of oxides from the difective structures coordinatively unsaturated in which the manganese ion assumes not unitary formal valences.

Without whishing to be bound by theory, it is believed that the formation of sub-oxides of manganese comprising manganates improves the redox properties of the catalytic composition, improving the catalytic performance of total oxidation (mineralization) of organic molecules.

Without whishing to be bound by theory, it is believed that the formation of sub-oxides of manganese comprising manganates increases the mobility of oxygen ions present in the catalytic composition in the processes of oxidation-reduction.

Without whishing to be bound by theory, it is believed that the formation of sub-oxides of manganese comprising manganates improve the properties of conduction and electron transfer of the catalytic composition.

Without whishing to be bound by theory, it is believed that the formation of sub-oxides of manganese comprising manganates give the catalytic composition properties of photo-conduction and electro-conduction.

It was found that, using potassium permanganate ($KMnO_4$) as oxidizing agent, the average oxidation value (Average Oxidation Number AON) of the sub-oxides of manganese comprising manganates is greater than that obtainable with the use of other oxidizing agents.

It was also found that, using potassium permanganate ($KMnO_4$) as oxidizing agent, the content of sub-oxides of manganese comprising manganates present in the catalytic composition is greater than that obtainable with the use of other oxidizing agents.

The catalytic compositions according to the present invention are identifiable by the generic empirical formula $Mn_aCe_bI_cO_x$, wherein the coefficients a and b can assume values comprised between 0.001 and 0.999, whereas the coefficient c, which takes account of the presence of additional metal and semi-metal ions (I), can vary between 0.000 and 0.998. The value assumed by the coefficients a, b, c in the various catalytic compositions is such that their sum is always equal to 1. While the value of the coefficient x is obtainable from the following mathematical relationship:

$$x=(V_{Mn} \cdot a + V_{Ce} \cdot b + V_I \cdot c)/2$$

wherein the terms $V_{Mn}$, $V_{Ce}$ and $V_I$ indicates the formal average valence in the catalytic composition respectively of the manganese (Mn) ion, of the cerium (Ce) ion and of the additional ion, such as to ensure the electroneutrality.

The total concentration of metals and semi-metals in the reagent solution is preferably between 0.1 and 3.0M, and more preferably is equal to 0.5M.

The atomic ratio manganese/cerium ($Mn_{at}/Ce_{at}$) in the catalytic composition will be preferably comprised between 0.75 and 2.0, and more preferably is equal to 1.0.

The pH of the solutions A and B and the temperature at which carry out the precipitation processes are chosen on the basis of the values of the constants of precipitation of the ions designated in the preparation of the catalytic composition.

According to the first method of manufacture described (protocol m1), the pH of the solution A is preferably comprised between 1.0 and 4.0, and more preferably is equal to 2.0.

According to the first method of manufacture described (protocol m1), the pH of the solution B is preferably comprised between 7.0 and 10.0, and more preferably is equal to 8.0.

According to the second method of manufacture described (protocol m2), the pH of the solution A' is preferably comprised between 4.0 and 6.0, and more preferably is equal to 5.0.

According to the second method of manufacture described (protocol m2), the pH of the solution B' is preferably lower than 3.0, more preferably lower than 2.0, still more preferably is equal to 1.0.

According to both the described methods of manufacture (protocols m1 and m2), it is preferable to operate the manufacture of the catalytic material in the temperature range of 30-100°C, more preferably 50-90°C, still more preferably 60-80°C.

Good results were obtained with the following catalytic compositions:

1. $Mn_{0.5}Ce_{0.5}O_x$, as obtained through the protocol described in Example 1, referred to in the description as sample $CM_{m1}$, (see example 1);
2. $Mn_{0.5}Ce_{0.5}O_x$, as obtained through the protocol described in Example 2, referred to in the description as sample $CM_{m2}$, (see example 2);
3. $Mn_{0.5}Ce_{0.4}Zr_{0.1}O_x$ referred to in the description as sample $CMZ_{m1}$, (see example 3);
4. $Mn_{0.4}Ce_{0.3}Ti_{0.3}O_x$ referred to in the description as sample $CMT_{m1}$, (see example 4).

The catalytic compositions according to the present invention can optionally be dispersed on the surface of the supports, to improve the mechanical properties and to minimize the concentration. To this aim techniques can be used both of "dry coating" [S. Otles et al., Powder Technology 208 (2011) 378-382 ; Y. Ouabbas et al., Powder Technology 190 (2009) 200-209] and of "wash coating", providing for the use of suitable binders.

For exemplificative but not limitative purposes of the present invention, as the support material can be cited alumina, silica, zirconia, titania, quartz, alumino-silicates, zirconyl-silicates, silicon carbides, silicon borates, nanotubes and carbon fibers, honeycomb ceramic structures, ceramic and metal membranes, and more.

The catalytic compositions according to the present invention can be in various forms. For example, they may be supplied in the form of powder, that is, of discrete solid particles of diameter less than 0.5 mm, or in other three-dimensional shapes (e.g., extruded, pellets, Rashig rings, etc..) of variable size between 5 and 50mm.

If the composition is in the form of powder, in general the average particle size will be of 1-500$\mu$m, preferably between 50 and 150$\mu$m.

The selection of this range of particle size is particularly advantageous for the purposes of application of the present invention, the objective being to minimize the maximum surface area and at the same time to have a material easy to handle and which does not create difficulties of separation in gas/liquid/solid reactions (for example in fluid bed reactors).

Structure, morphology, physical properties and methods of control of the physical properties of the catalytic adsorbing materials according to the present invention

A characteristic element of the present invention is in particular the innovative structure and morphology of the catalytic/adsorbing compositions described and claimed.

A characteristic element of the present invention is in particular the construction of innovative catalytic/adsorbing compositions based on compounds of manganese and cerium with a particular meso-porous structure with pores of extremely uniform size, having a diameter falling predominantly in the range of 6 - 20nm (see examples 5-7, 9-11).

A further characterizing element of the present invention is in particular a method of realization that, within wide limits, allows to impart specific properties of texture to the compositions based on compounds of manganese and cerium object of the invention (see examples 8-11).

In the context of the present invention the expression texture is intended to designate the set of physical characteristics of the catalytic/adsorbing compositions, such as surface area (inner and outer) and porosity (volume, shape and diameter of the pores).

The catalytic/adsorbing compositions of the present invention are formed by particles of nanoscopic spherical shape, hereafter referred to as nanospheres (see examples 1, 6, 7).

The catalytic/adsorbing compositions of the present invention are composed of nanospheres of uniform size (see examples 1, 6, 7).

The size of the nanospheres grow or shrink in view of the experimental conditions of implementation and the chemical formulation (see examples 1, 6, 7, 8).

Without whishing to be bound by theory, it is believed that the nanospheres are the discrete units at the base of the final structure of the catalytic/adsorbing compositions of the present invention (see examples 1, 6, 7, 8).

Without whishing to be bound by theory, it is believed that the catalytic compositions forming object of the present invention are materials structured at the nanoscopic level obtained through the aggregation/agglomeration of said nanospheres (nano-structured materials).

Without whishing to be bound by theory, it is believed that the nanospheres are the "building block" (brick) of the innovative structure of the catalysts of the invention (see examples 1, 6, 7, 8).

Without whishing to be bound by theory, it is believed that, in a manner similar to other nanostructured materials reported in the literature, the weaving of the catalytic/adsorbing compositions of the present invention can be properly carried out according to a precise pattern or a specific project (see Examples 1, 6, 7, 8).

Without whishing to be bound by theory, it is believed that the special structure of the catalytic compositions forming object of the present invention is, according to the technologies currently available, obtainable only and exclusively through the technique of the embodiment described in the present invention.

In recent years some manufacturing techniques have been developed that have improved the texture of the catalytic compositions based on cerium and manganese. In particular, in WO2007/069238 it is proposed a new method for the preparation of compositions based on crystalline ceria ($CeO_2$) and trivalent manganese oxide ($Mn_2O_3$) with high surface area. However, the method described in this document, in addition to the application limits due to the complexity and large number of operating steps, does not allow control of the porosity of the compositions.

In addition, the method described in WO2007/069238 does not allow the control of other important structural properties such as crystal size of cerium and dispersion of the two compounds.

Without whishing to be bound by theory, it is believed that, by controlling the process of growth and aggregation of the nano-spheres, it is possible to obtain catalytic compositions based on cerium and manganese having specific and predetermined structural properties (see example 1, 6, 7, 8, 9).

It is believed in particular that, by controlling the size of the nanospheres, one can determine the porosimetry of the material and with it the extension of the total surface area (see examples 1, 6, 7, 8, 9).

The size of the nanospheres of the material according to the present invention are determined by the following parameters of the fabrication technique:

    1. relative amount of manganese and cerium in the composition,

    2. pH value of precipitation,

    3. ageing temperature,

    4. initial oxidation state of the metallic and semi-metallic ions,

    5. strength of the alkaline agent,

    6. oxidizing agent,

    7. temperature and time of the calcination treatment.

In particular, the ratio manganese/cerium (MnCe) in the catalytic composition according to the present invention is determined in the control of the size of the nanospheres.

By varying the atomic ratio manganese/cerium ($Mn_{at}/Ce_{at}$) between 0.25 and 3.0 the diameter of the nano-spheres ranges between 1 nm and and 32nm (see example 8).

By varying the aforementioned parameters of the fabrication technique, catalytic compositions based on manganese cerium have been realised comprised of nanospheres with the average diameter varying between 0.5 nm and 40nm, obtaining mesoporous materials having total pore volume variable between 0.2 and $1.0 cm^3/g$, average pore size varying between 5nm and 50nm, total surface area between 120 and $300 m^2/g$.

In particular, the sample $CM_{m1}$ (composition $Mn_{0.5}Ce_{0.5}O_x$) is composed of nanospheres with average diameter of 20nm which carry out a mesoporous material, having a total surface area of $160 m^2/g$ and an average pore diameter of about 9nm.

Without whishing to be bound by theory, it is believed that the texture of the catalytic compositions of the present invention is particularly advantageous for use in chemical processes where the reaction kinetics is negatively affected by phenomena of transfer of matter.

The manufacture of catalytic compositions with pores having regular structure and extremely uniform size is particularly advantageous for the purposes of application of the present invention. in fact, the objective is to provide catalytic compositions for use in catalytic processes suffering from problems of accessibility of the reactant species (MW> 100uma) within the porous structure of the catalytic system.

It is known that macro-porous (pore diameter> 50nm) and microporous (pore diameter <2nm) materials have a limited importance from the catalytic standpoint than meso-porous (pore diameter 2-50nm) material. In fact, the macro-porous catalysts generally have a lower catalytic activity due to the low surface area (circa 10m$^2$/g), while the catalytic systems with high internal surface area (>300m$^2$/g) have problems of diffusional nature, due to the fact that the dimensions of the micro-pores are not accessible to almost all of the reactant molecules (MW> 30uma). In contrast, the mesoporous materials combine the dual advantages of high surface area, usually ranging between 50 and 300 m$^2$/g, with pore size suitable for the access of reactant molecules of medium to large size.

Without whishing to be bound by theory, it is believed that the manufacturing method described in the present invention allows to improve the chemical and physical properties of compositions based on manganese and cerium for use in the catalysis in liquid and gas phase.

It is believed, in particular, that the process of realization described in the present invention allows to improve the adsorbing properties and the properties of accumulation of the compositions based on manganese and cerium in respect of different classes of organic molecules and in a special way with respect to those known to belong to compounds highly polluting and difficult to biological removal. This aspect is particularly important in the processes of catalytic oxidation in liquid phase (CWO) of polluted compounds which are particularly toxic and resilient such as phenol and the carboxylic acids of low molecular weight ($C_1$-$C_3$).

In general, the materials with adsorbing properties are market both in the environmental field and in the industrial process of production. In particular, adsorbing materials are commercially used in the treatment of sanitizing, drying and purification of living and working environments, in removing molecules of pollutants, toxic, noxious or troublesome present and persistent in air and water, in the preparation of systems of chromatographic separation and in the cleaning of process stream.

The adsorbing properties of the catalytic compositions developed according to the present invention are particularly advantageous for the purposes of application, since they allow to maximize the ability to capture-remove-accumulate and retain certain highly polluting molecules such as pigments and dyes, polymers (PEG), phenols, alcohols , aldehydes and ketones, ethers, esters and carboxylic acids, contained in water from industrial processes.

The catalytic compositions forming object of the present invention show to be able to remove, by adsorption and accumulation, quantities of polluting compounds also equal to 100% of the weight of the catalytic composition.

Good results have been obtained in particular with the samples $CM_{m1}$ and $CM_{m2}$ (compositions $Mn_{0.5}Ce_{0.5}O_x$, respectively obtained through the protocols described in Examples 1 and 2) in the adsorption and oxidation of phenol, which have shown an ability to remove as much as ten times higher compared to the catalysts of CWAO known in the literature (see example 12).

Good results have been obtained in particular with the samples $CM_{m1}$ and $CM_{m2}$ in the adsorption and oxidation of acetic, formic and oxalic acid, which have shown an ability to remove as much as ten times higher compared to the catalysts of CWAO known in the literature.

Good results have been obtained in particular with the samples $CM_{m1}$ and $CM_{m2}$ in the accumulation of methyl-tertiary-butyl ether (MTBE) at low pressure in the gas phase and concentration in the liquid phase (see example 13).

Good results have been obtained in particular with the samples $CM_{m1}$ and $CM_{m2}$ in the adsorption at the same time of heavy metals and organic pollutants present in process water of the metalworking industries.

Good results were also obtained in particular with samples $CM_{m1}$ and $CM_{m2}$ in the purification of wastewater polluted with cyanides.

Crystal-chemical properties and methods of control of the crystal-chemical properties of catalytic adsorbing materials according to the present invention

From the crystal-chemical point of view, the nano-spheres of the catalytic materials according to the present invention consist of two different types of solid phases, perfectly mixed, distinguishable only with observations of high resolution transmission electron microscopy in (HRTEM) and through analysis of X-ray diffraction (XRD). The first phase is constituted by a network of nanoscopic reticular structures, ie a phase composed of ultrafine nanocrystalites of oxides of cerium ($CeO_x$; $1.5 \leq x \leq 2.0$), with a diameter of 1-6nm, aggregated/organised in "Nano Crystal Domains" (DNC).

The second phase is a solid "non-crosslinked" structure, defined as "Vitreous Solid Mixture" (MSV). The Vitreous Solid Mixture is a metastable phase consisting of oxides and sub-oxides of the metallic and semi-metallic elements forming object of the present invention (see Examples 14-16).

The realization of nanocrystalline particles of $CeO_x$, with $1.5 \leq x \leq 2$, with a diameter of the crystallites of less than 10nm is very important for the purposes of the present invention, since the "ultrafine" size of the nanocrystallites improve the chemical reactivity of the same crystallite and increase the surface area [J. Phys. Chem. C 2010, 114, 12909-12919].

It is known that the ceria ($CeO_2$) is highly stable in its crystalline form, rarely, in fact, the ceria exists in a form other than crystalline. Due to its great stability almost all the methods known for the preparation of catalysts based on cerium lead to the formation of materials with well developed crystals of ceria (for example with dimensions 20-50nm) or with nanocrystals aggregateed into particles in which the individual crystallites of ceria have average size greater than 10nm or at least difficult less than 6nm.

WO2007/069238 describes the manufacture of catalytic compositions based on crystalline oxides of trivalent manganese ($Mn_2O_3$) and tetravalent cerium ($CeO_2$), the ultrafine size of which, diameter lower than 5nm, are obtained through a method of preparing type "nanocasting" or "bottleship", which provides for the confinement of the priming solution in a microporous matrix which is subsequently dissolved to allow the recovery of the catalytic preparation contained in it.

Unlike the method of preparation type "bottleship" described in WO2007/069238, according to the present invention catalytic compositions are realised wherein the ultrafine nanoparticular component is generated directly without the use of microporous matrices.

Unlike WO2007/069238, the method of preparation forming object of the present invention allows to modulate and control the size of the nanocrystallites of $CeO_x$, with $1.5 \leq x \leq 2$.

Without whishing to be bound by theory, it is believed that the simultaneous generation of ultrafine nanoparticles and vitreous suboxides is the main result of the manufacturing method described in the present invention, which leads to an improvement in catalytic performance.

Without whishing to be bound by theory, it is believed that the realisation of ultrafine nanocrystalline particles $CeO_x$, with $1.5 \leq x \leq 2$ (i. e. with diameter lower than 6nm) will have more defects and lattice distortions in the crystal structure of the same oxides of cerium $CeO_x$, with $1.5 \leq x \leq 2$ (i. e. variations of cell parameters and vacancies of oxygen ions), improving the catalytic properties of the compositions forming object of the present invention.

Without whishing to be bound by theory, it is believed that the realisation of ultrafine nanocrystalline particles $CeO_x$, with $1.5 \leq x \leq 2$ (i. e. with diameter lower than 6nm) improves the stability of the catalytic surface to the oxygen vacancies caused by the presence of trivalent cerium ions ($Ce^{3+}$) and/or by other cations in the crystal lattice of $CeO_x$, with $1.5 \leq x \leq 2$.

Without whishing to be bound by theory, it is believed that the phase MSV is characterized by a strong heterogeneity in the valence and the degree of coordination of the Mn ions, from which follows the formation of sub-oxides. The areas of the material in greater oxygen deficiency may represent areas of higher reactivity, improving the catalytic performances of the compositions object of the present invention in oxidation reactions.

It is also believed that the phase DNC also acts as a supporting structure, able to confer greater mechanical stability and to favor the mutual dispersion of the different components, while the phase MSV assumes the role of adhesive/aggregant.

Without whishing to be bound by theory, it is believed that the manufacturing method described in the present invention allows to modulate the amounts of the two solid phases, improving the catalytic performance, the crystal-chemical characteristics and thus the structural and mechanical properties of the catalytic compositions object of the present invention.

Without whishing to be bound by theory, it is believed that the amount of DNC phase can be controlled by adjusting the parameters of the production process.

In particular, the amount of cerium is determinant in the control of the levels of DNC phase of the catalytic composition (see example 17).

According to the purposes of the present invention it is preferable an amount of DNC phase in the catalytic composition not lower than 40%, more preferably equal to 50%, still more preferably equal to 60%.

<u>Degree of dispersion of solid phases and uniformity and homogeneity of the catalytic materials according to the present invention</u>

A specific aspect of the present invention is the realization of nano-structured catalytic compositions, comprised of suboxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine crystalline nanoparticles of $CeO_x$, with $1.5 \leq x \leq 2$ (i. e. with diameter 1-6nm), characterized by a high dispersion of its components and an increased amount of manganese in the surface layers of the same compositions, both in terms of concentration and in terms of active surface area exposed (see examples 18 and 19).

The manufacture of catalytic compositions with high content and dispersion of the active phase (Mn and Mn-Ce) in the surface layers of the same compositions is particularly advantageous for the purposes of this patent application. The aim is, in fact, to provide nano-structured catalytic compositions, comprised of sub-oxides of manganese and ultrafine crystalline nanoparticles di $CeO_x$, with $1.5 \leq x \leq 2$, highly active in the oxidation of organic molecules particularly refractory (resistant) to the normal processes of oxidation.

An important objective of the present invention is the realization of nanostructured catalytic compositions, consisting of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine crystalline nanoparticles of $CeO_x$, with $1.5 \leq x \leq 2$, characterized by a greater amount of the active phase in the surface layers (i. e. Mn and Mn-Ce > 20% by weight) that leads to a more catalytically active surface area (>$50 m^2/g$).

The surface composition of a heterogeneous catalyst is one of the aspects of greater importance for catalysis, as the reactant species after being chemisorbed on the surface of the catalytic material, are activated/transformed by the active sites present on the surface of the catalytically active phase (active phase). The number of these active sites increases with the catalytically active area and, therefore, with the concentration and dispersion of the active phase in the surface layers. At the same load of the active phase and total surface area, the more active catalytic compositions are known to be those characterized by a greater dispersion.

It is known that most of the techniques of production of catalysts currently in use in commercial and industrial use (ie, for example, coprecipitation, deposition-precipitation, impregnation, spray-emulsion, electro-spinning, combustion, etc..) does not allow the realization of catalytic compositions with high concentration of the active phase unless a marked reduction in the level of dispersion of the active phase of the surface area and catalytic activity.

Without whishing to be bound by theory, it is believed that the new process for manufacturing catalytic materials according to the present invention allows to provide nano-structured catalytic compositions, comprised of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine nanocrystallites of $CeO_x$, with $1.5 \leq x \leq 2$, wherein the manganese even at high concentrations (loads) is dispersed in almost ionic, without alterations in the properties of weaving or reductions in the extension of the surface area (see examples 18 and 19).

Without whishing to be bound by theory, it is believed that the new process for manufacturing catalytic materials according to the present invention allows to obtain the preferential accretion of a solid phase with respect to another (ie MSV and DNC) in the surface layers of the same nano-structured catalytic compositions, consisting of sub-oxides of manganese and ultrafine particles of nanocrystalline $CeO_x$, with $1.5 \leq x \leq 2$ (see example 17).

Without wishing to be bound by theory, it is believed that the particular structure of the catalytic compositions of the present invention exerts a stabilizer against the manganese atoms exposed on the surface of the same compositions, favoring, therefore, the development of the surface area catalytic activity (ie Mn and Mn-Ce).

The catalytic compositions of the present invention possess a higher concentration of manganese atoms in the surface layers than in deeper or bulk (see examples 18 and 19).

The atomic concentration of manganese in the surface layers of the catalytic compositions of the present invention can also be three times greater than that present in other catalytic compositions of a similar chemical formulation but made with a different method (see example 18).

The extension of the surface area due to the oxides of manganese present in the catalytic compositions of the present invention may also be four times higher than that reported by other compositions of a similar chemical formulation known in the literature (see example 19).

Without wishing to be bound by theory, it is believed that the high dispersion of manganese in the catalytic composition forming object of the present invention promotes and increases the amount of this element in the superficial layers of the same compositions.

Without wishing to be bound by theory, it is believed that the higher amount of manganese in the surface layers promotes the activity of oxidation in the processes of CWAO of organic molecules (phenols, carboxylic acids, hydrocarbons, etc..) and inorganic molecules (cyanide, ammonia , etc.); which are particularly toxic and refractory to the usual treatments of oxidation.

The surface of the catalytic compositions of the present invention can be complex from the point of view of the chemical formulation and the number of compounds and phases that compose it.

Without wishing to be bound by theory, it is believed that the production process described in the present invention allows to obtain a catalytic compositions in which sub-oxides of manganese and whose ultrafine nanoparticles of ceria are distributed in a substantially uniform manner over the entire surface.

Given the particular structure of the catalytic compositions of the present invention, constituted by at least two chemical elements (ie, Mn and Ce) and at least two different solid phases (ie DNC and MSV), it is possible to identify two different types of dispersion.

For the purposes of the present invention is defined as "phase dispersion" the level of dispersion/distribution of the phase DNC in the phase MSV.

For the purposes of the present invention is defined as "molecular dispersion" the level of dispersion/distribution of different chemical elements within the two phases.

Phase dispersion of the catalytic materials according to the present invention

The size of the ultrafine nanocrystallites (1-6nm) of $CeO_x$ with $1.5 \leq x \leq 2$ and the remarkably intimate mixing of the phases DNC and MSV, obtained with the process described in the present invention, make the surfaces of the catalytic compositions of the present invention extremely homogeneous and uniform.

The catalytic compositions of the present invention do not show significant differences from the areas of surface chemistry, which are not present on the surface of the appreciable areas of segregation, characterized by a different concentration of the two solid phases.

The chemical analysis of the surface of the catalytic compositions of the present invention indicates that the chemical composition varies from point to point (spot diameter of 0.05 uM) to a maximum of $\pm$ 6% compared to the average, this value falling to $\pm$ 4 % in the compositions with a high concentration of cerium and manganese (see example 20).

Molecular dispersion of catalytic materials according to the present invention

In the catalytic compositions of the present invention, the points of the surface with nanocrystalline domains (DNC) are characterized by the almost exclusive presence of cerium cations (see example 21).

In the catalytic compositions of the present invention, the points of the surface where there is the vitreous solid mixture (MSV) are characterized by the presence of cations of cerium, manganese and other elements, with each other in concentration ratios dependent on the chemical formulation (see Example 21).

In the phase MSV of the catalytic compositions of the present invention, the cerium and manganese cations are bound to each other in a non-coordinative way through oxygen bridges [-Mn-O-Ce-], which leads to dispersion of two ionic elements.

The contact between the phase and the DNC MSV is accomplished through the creation of an extremely reactive interface of contact.

Without wishing to be bound by theory, it is believed that at the interfacial area it is reached a high level of interaction between the different elements, which improves the catalytic activity due to the synergistic action of the same elements.

Without wishing to be bound by theory, it is considered that the catalytic activity of the compositions object of the present invention in the processes of oxidation and reduction is directly correlated with the interfacial area.

Oxidation state of the elements present in the structure of catalytic materials according to the present invention

An important result of the present invention is the realization of catalytic compositions containing sub-stoichiometric oxides (sub-oxides) defective in terms of oxygen content.

Without wishing to be bound by theory, it is believed that the presence of the sub-oxides in the catalytic compositions of the present invention enhances their ability to chemically sorbing oxygen and oxygen molecules.

The elements cerium (Ce) and manganese (Mn) tend to form crystalline oxides and non-stoichiometric but no crystalline phases containing both cations (solid solutions). Thus, the catalytic compositions based on known compounds of manganese and cerium, contain various mixtures of the oxides blocks of the two elements (ie, $MnO$, $MnO_2$, $Mn_2O_3$, $Mn_3O_4$ and $Ce_2O_3$, $CeO_2$).

In particular, WO2007/069238 describes the exclusive presence of $Mn_2O_3$ and $CeO_2$, while Chen et al. [Appl. Catalysis.B: Environmental, 32 (2001) 195] presents catalysts consisting of $CeO_2$ and $MnO_2$ mainly.

Otherwise, the catalytic compositions of the present invention contain highly defective nano-crystalline ceria in intimate contact with a phase consisting of a vitreous solid mixture of sub-stoichiometric oxides (sub-oxides) of manganese and cerium.

Without wishing to be bound by theory, it is believed that the high level of dispersion of the elements present in the catalytic compositions of the present invention confers greater defectivity in oxygen.

Without wishing to be bound by theory, it is believed that manganese binds to oxygen in a defective and non-coordinative way, forming sub-stoichiometric oxides (ie phase MSV), in which it assumes formally non-unitary values of oxidation.

Without wishing to be bound by theory, it is believed that the phase MSV increases ions vacancy ($O^{2-}$) in the crystal lattice of ultrafine nanoparticles of $CeO_x$, with $1.5 \leq x \leq 2$, promoting further lattice defects and strong distortion of the crystal lattice.

Without wishing to be bound by theory, it is believed that the oxygen vacancies and the presence of sub-oxides increases the number of sites of Lewis acids present on the surface, making the catalytic compositions of the present invention particularly reactive towards the electron-donors, which results in a better ability to chemically sorbing oxygenated organic species.

The presence of lattice defects in the ceria and areas of high unsaturation sites is particularly advantageous for the purposes of this patent application, as it improves the reactivity of the surface towards the oxygen, promoting the oxidation of organic molecules refractory (resistant) to the normal treatments of oxidation.

It is known that the performance of a catalyst depends on the number of active sites and that these are identifiable points with a higher surface energy as seats of lattice defects and electronic unsaturations.

In multi-component catalytic systems, the active sites are preferentially localized in the contact zones (interface) and, therefore, their concentration depends on the degree of dispersion.

In the catalytic compositions of the present invention the areas most affected by the presence of lattice defects and electronic unsaturations are those in which the ultrafine crystalline nanoparticles (DNC) are in direct contact with the phase MSV where the shortage of oxygen is higher.

Without wishing to be bound by theory, it is believed that the areas of interface between the solid phases DNC and MSV represent the areas with a higher concentration of active sites in the catalytic compositions of the present invention.

Without wishing to be bound by theory, it is believed that the high dispersion of the elements present in the catalytic compositions of the present invention and the extremely small size of the nanoparticles of $CeO_x$, with $1.5 \leq x \leq 2$, leading to a high concentration of lattice defects and electronic unsaturations in the same compositions.

Without wishing to be bound by theory, it is believed that the lattice defects and the points of electronic unsaturations promote both the chemisorption of organic species and oxygen at low temperature.

Catalytic activity in the environmental field and applicability of the catalytic materials according to the present invention

The materials of the present invention are particularly active in the processes of total oxidation in liquid phase and gas in the presence of air/oxygen. The materials developed are able to lead to complete oxidation of organic molecules of different nature, such as hydrocarbons, phenols, carboxylic acids, ethers, alcohols, organohalogen compounds and organo-nitrogen compounds, polymers, pigmenting substances particularly resilient and stable.

Good results have been obtained in particular with the samples $CM_{m1}$ and $CM_{m2}$ in the catalytic oxidation of phenol in the aqueous phase with air (CWOA) (see examples 22 and 23).

Good results have been obtained in particular with the samples $CM_{m1}$ and $CM_{m2}$ in the catalytic oxidation of acetic acid in the aqueous phase with air (CWOA) (see example 24).

Good results have been obtained in particular with the samples $CM_{m1}$ and $CM_{m2}$ in the removal of cyanides in the presence of heavy metals (see examples 25 and 26).

Without wishing to be bound by theory, it is considered that the catalytic compositions consisting of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine nanocrystallites of $CeO_x$, with $1.5 \leq x \leq 2$ forming object of the present invention do not undergo degradation/dissolution phenomena (leaching) due to the acidic environment in which the CWOA processes operate.

Without wishing to be bound by theory, it is considered that the catalytic compositions consisting of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine crystalline nanoparticles of $CeO_x$, with $1.5 \leq x \leq 2$ forming object of the present invention are not subjected to sintering during the operating CWOA processes.

Without wishing to be bound by theory, it is considered that the catalytic compositions consisting of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine crystalline nanoparticles of $CeO_x$, with $1.5 \leq x \leq 2$ forming object of the present invention are highly stable in an oxidizing atmosphere (air/oxygen) at a temperature of 600 °C.

The invention will be described below for illustrative but not limitative purposes, with particular reference to some illustrative examples, with particular refernce to the figures of the accompanying drawings, in which:

- Figure 1A (Example 5) shows a photographic image obtained with a scanning electron microscope SEM at low magnification of the sample $CM_{m1}$ of Example 1;
- Figure 1 B (see Example 5) shows a photographic image obtained with a scanning electron microscope SEM at low magnification of a reference composition, prepared by conventional co-precipitation [Appl. Catalysis. B: Environmental, 32 (2001) 195];
- Figure 1A (example 5) shows a photographic image at high magnification SEM of the sample $CM_{m1}$ of Figure 1A;
- Figure 1B (example 5) shows a photographic image at high magnification SEM of the composition of reference of Figure 1B;
- Figure 2 (example 6) shows a diagram of the isothermal curve of nitrogen adsorption ($N_2$) of the sample $CM_{m1}$ of

Example 1 at a temperature of -196 °C;

- Figure 3 (example 7) shows a porosimetric distribution diagram of the sample $CM_{m1}$ of Example 1;
- Figure 4 (example 8) shows a diagram illustrating the variation of the average diameter of the nano-spheres as a function of atomic fraction of cerium (Xce) in the catalytic compositions consisting of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and of ultrafine nanocrystallites of $CeO_x$, with $1.5 \leq x \leq 2$ according to the present invention;
- Figure 5 (example 9) shows a diagram illustrating the change in the total surface area and the diameter of the pores as a function of the average diameter of the nano-spheres of the catalytic compositions consisting of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine nanocrystallites of $CeO_x$, with $1.5 \leq x \leq 2$, according to the present invention;
- Figure 6 (example 10) shows a schematic representation of the process of growth and aggregation of the nano-spheres of the catalytic compositions consisting of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine crystalline nanoparticles of $CeO_x$, with $1.5 \leq x \leq 2$, according to the present invention;
- Figures 7A-7D (example 11) schematically illustrate the various stages which lead to the realization of the meso-porous structure of the catalytic compositions of the present invention, and in particular
- Figure 7A (Example 11) shows a SEM image of the sample $CM_{m1}$ of Example 1;
- Figure 7B (Example 11) shows an exemplary schema of the basic structure of the surface of the catalyst consisting of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine crystalline nanoparticles of $CeO_x$, with $1.5 \leq x \leq 2$, according to the present invention;
- Figure 7C (Example 11) shows an exemplary schema of the mechanism of surface growth of the structure of catalytic compositions consisting of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine crystalline nanoparticles of $CeO_x$, with $1.5 \leq x \leq 2$, according to the present invention ;
- Figure 7D (Example 11) shows an exemplary schema of the final structure of catalytic compositions consisting of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine crystalline nanoparticles of $CeO_x$, with $1.5 \leq x \leq 2$, according to the present invention;
- Figure 8 (example 12) shows a comparative diagram of the adsorption capacity of phenol of the sample $CM_{m1}$ of Example 1, of a similar reference composition prepared by conventional co-precipitation [Appl. Catalysis. B: Environmental, 32 (2001) 195] and other systems based on ceria ($CeO_2$) and noble metals (Ru, Pd, Pt) prepared as reported in the literature [Topics Catal., 33 (2005) 77];
- Figure 9A (Example 13) shows a diagram of the isothermal curve of adsorption of vapors of methyl-tert-butyl ether (MTBE) by the sample $CM_{m1}$ of Example 1;
- Figure 9B (Example 13) shows a diagram of the isothermal curve of adsorption of vapors of methyl-tert-butyl ether (MTBE) by a commercial highly adsorbing zeolite (Zeolyst CBV®901);
- Figure 10 (example 14) shows a photograph of the HR-TEM of the sample $CM_{m1}$ of Example 1;
- Figures 11A and 11 B (example 15) show the diffractograms of certain catalytic compositions consisting of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine nanocrystallites of $CeO_x$, with $1.5 \leq x \leq 2$, according to the present invention for different ratios of manganese/cerium respectively in the area 20-38 (Figure 11 A) and 40-68 degrees 2theta (Figure 11B);
- Figures 12A and 12B (example 16) show the results of the analysis which is performed on the deconvolved diffraction peak place at 30° 2theta of two catalytic compositions consisting of sub-oxides of manganese comprising $MeMnO_z$ manganates, wherein $1 \leq z \leq 4$, Me being constituted of one or more elements selected amongst alkali metals, alkaline earth metals, transition metals and rare earths, with the exception of Mn, and ultrafine nanocrystallites of $CeO_x$, with $1.5 \leq x \leq 2$, according to the present invention, having atomic fraction of cerium ($\chi_{Ce}$) respectively equal to 0.27 and 0.75;
- Figure 13 shows a diagram relating to the variation of the fraction of area XRD due to the presence of crystalline phase and the relative concentration of DNC phase as a function of the atomic fraction of cerium ($\chi_{Ce}$);
- Figure 14 shows a diagram relating to the variation of the relative concentration of Mn in the surface layers ($Mn_{surface}/Mn_{bulk}$) as a function of the atomic fraction of manganese respectively in the catalytic compositions consisting of sub-oxides of manganese and ultrafine nanocrystallites of $CeO_x$, with $1.5 \leq x \leq 2$, according to the present invention (upper curve) and of a similar reference composition prepared by conventional co-precipitation [Appl.

Catalysis. B: Environmental, 32 (2001) 195] (lower curve);

-   Figure 15 shows a diagram relating to the variation of the surface area relative to manganese ($X_{Mn}$ $SA_{BET}$) as a function of the atomic fraction of manganese in the catalytic compositions consisting of manganese and ultrafine nanocrystallites of sub-oxides of $CeO_x$, with $1.5 \leq x \leq 2$, according to the present invention (upper curve) and of a similar reference composition prepared by conventional co-precipitation [Appl. Catalysis. B: Environmental, 32 (2001) 195] (lower curve);

-   Figure 16A shows the chemical map XPS/ESCA of a section of $10\mu m \times 10\mu m$ of surface area of the sample $CM_{m1}$ of Example 1, in terms of color change; the change in concentration/dispersion of manganese ions (Mn) on the section surface under examination is measured through the gray scale extending from black to white gradually with decreasing atomic concentration of manganese ion from 64.0% (at/at) to 56.0% (at/at.);

-   Figure 16B shows the chemical map XPS/ESCA of a section of $10\mu m \times 10\mu m$ of the surface area of the sample $CM_{m1}$ of Example 1, in terms of color change; the change in concentration/dispersion of the cerium ions (Ce) on the section of surface under examination being measured through the gray scale that extends gradually from black to white with decreasing atomic concentration of cerium ions from 44.0% (at./at.) to 36.0% (at./at.) ;

-   Figure 16C shows a SEM picture of the sample $CM_{m1}$ of Example 1, with a 10 $\mu m \times 10\mu m$ indication area used for the chemical map of Figures 16A and 16B;

-   Figure 17A shows, in gray scale, the chemical map XPS/ESCA of a $1\mu m \times 1\mu m$ surface section of a restricted area of the sample $CM_{m1}$ of Example 1. The image shows the level of the distribution/aggregation of the ions cerium (Ce) and manganese (Mn) on the surface in question, where the atomic concentrations of the two ions can be derived from the relative intensities of blackening, resulting in the perimeter zones of interface medium-pitch (gray 50-60%);

-   Figure 17B shows the high-magnification FE-SEM photo-insert (400kx) of one of four quadrants that divide Figure 17A which shows the morphological nature of the sample $CM_{m1}$ of Example 1;

-   Figure 18 shows a comparative diagram of the catalytic performances of the sample $CM_{m2}$ of Example 2 in the oxidation reaction of phenol in liquid phase with air/oxygen (CWAO) with respect to those of a similar reference composition, prepared by conventional co-precipitation [Appl. Catalysis. B: Environmental, 32 (2001) 195], and other systems based on ceria ($CeO_2$) and noble metals (Ru, Pd, Pt) known in the literature [Topics Catal., 33 (2005) 77];

-   Figure 19 shows a comparative diagram of the selectivity to $CO_2$ of the sample $CM_{m1}$ of Example 1 in the oxidation reaction of phenol in liquid phase with air/oxygen (CWAO) with respect to those of a similar reference composition, prepared by conventional coprecipitation [Appl. Catalysis. B: Environmental, 32 (2001) 195] at a temperature of 130 to 150 °C;

-   Figure 20 shows a comparative diagram between the catalytic performance of the sample $CM_{m2}$ of Example 2 in the oxidation reaction of acetic acid in liquid phase with air/oxygen (CWAO), in terms of conversion of acetic acid (gray bar) and selectivity to $CO_2$ (black bar), compared to those of a similar reference composition prepared by conventional co-precipitation [Appl. Catalysis. B: Environmental, 32 (2001) 195];

-   Figure 21 shows an illustrative diagram of the results obtained from the sample $CM_{m1}$ at a temperature of 70 °C in the removal of cyanide and copper ions present in industrial waste water of treatment of metal surfaces, and

-   Figure 22 shows an illustrative diagram of the eco-toxicological result performed on polluted industrial waste water treated at a temperature of 70 °C with the sample $CM_{m1}$ of Example 1.

## EXAMPLES

## Methods of analysis

The chemical composition of the catalysts was obtained by measurements of X-ray fluorescence (XRF) using a spectrophotometer model BRUKER AXS - S4 Explorer X-ray Fluorescence spectrometer. The samples were analyzed in the state of transfer, without further manipulation.

The determination of the values of total surface area, of porosimetry and pore radius of the catalytic compositions was performed using measures of physical adsorption of nitrogen at its condensation temperature (-196 °C) and processing of the relative adsorption isotherm, in the range $p/p_0$ from 0 to 0.3, by the BET method for determining the amount of $N_2$ adsorbed monolayer in the "monolayer" (Vm). By the same isotherms porosimetric distribution curves were obtained, applying the methods "Horvath-Kavazoe" and "BJH" respectively for the evaluation and determination of the size and distribution of micro and meso pores. The measurements were made using an automated tool for the determination of adsorption isotherms (Micromeritics, mod. ASAP 20-10). Before the measures, all the samples were pre-treated at a temperature of 100 - 400 °C under vacuum until they reached values of residual pressure below 0.01 mbar.

The nature of the solid phases, understood as the degree of crystallinity, and the type of the various crystalline species that may be present have been evaluated through the use of a powder X-ray diffractometer, equipped with dual detector, model Philips X-Pert diffractometer. The instrument is equipped with a high voltage current generator (HT-generator PW1830), an X-ray monochromatic source (lamp of copper and nickel filter β) Cu-Kα (Λ = 1.5406 Å). The measurements were carried out by applying to the source a voltage of 40kV and a current of 30mA. The average size of the crystallites was obtained by measures for widening of the band of diffraction of the att X as indicated by the equation of Sherrer:

$$d = \frac{0,9\lambda}{B \cdot \cos(2\theta/2)}$$

where: λ = 1.5406 Å, B is the width of the diffraction line calculated as FWHM in degrees 2θ and the position of the maximum of the line.

The Scherrer equation was applied to the XRD peak characteristic of the crystalline species, in the acquisition of a Gaussian distribution of the peak.

The identification of the diffraction peaks was performed on the basis of reference spectra contained in the Joint Committee Powder Diffraction Standards (JCPDS) database.

The morphology and structural characteristics at the microscopic level were analyzed by transmission electron microscopic observations using an instrument PHILIPS CM12 having a maximum resolution (point-to-point) of 2.4 Å. The samples were prepared by dispersing the catalyst in iso-propyl alcohol under ultrasound and then depositing a drop of the suspension on screens of gold.

The micrographs describing the texture of the various materials were obtained through the use of SEM microscope, Philips model XL EGF/SFEG Scanning Electron Microscopy, equipped with a field emission gun for the generation of electrons and a EDAX probe for analytical measurements. The images were obtained by working with an acceleration voltage of 5-20kV, and a distance lens to sample of 20-10mm. The measurements were performed after treatment of the sample under vacuum (ultra vacuum) and covering of gold (coating by gold sputtering).

Surface chemistry analysis data were obtained using a spectrometer-spectroscope by Physical Electronics GMBH PHI 5800-0 (XPSESCA), operating with monochromatic radiation Al-K α to a power of the incident ray of 350W and with a pass energy of 10-60eV.

The tests in the liquid phase in the removal of phenol, acetic acid, cyanide and heavy metals have been conducted in an autoclave made of AISI 316 steel completely covered with PTFE working at high pressure.

The concentration of phenol, acetic acid and cyanide was determined by measures of liquid chromatography using a HPLC system (Dionex Pump Series P680) provided with two pumps for solvent, a control module of the pneumatic system, a manual injector (Rheodyne model) and a detector (Dionex UV-Vis detector UVD 170U). The separation and identification of compounds was performed using a packed type chromatographic column operating at reverse phase (C16 Acclaim PolarAdvantage 3 μm, dim. 4.6x150mm), while for the operational control of the instrument, the acquisition and the data processing was conducted using a suitable software. The concentration of total organic carbon (TOC) in solution was determined by means of an automated tool Shimazu (Mod 5000A). The amount of carbon dioxide formed during the reaction CWO of phenol was determined gravimetrically, bubbling the gas stream leaving the reactor in a saturated solution of $Ba(OH)_2$. The precipitate of $BaCO_3$ was filtered, washed, dried at 100 °C and then weighed.

Preparation of catalytic compositions

Reference example 1 Preparation of the composition $Mn_{0.5}Ce_{0.5}O_x$ through m1 protocol. Sample $CM_{m1}$

The materials used for the preparation of the sample $CM_{m1}$ are:

- Manganous nitrate hydrate (Mn $(NO_3)_2$ $4H_2O$) available from Aldrich,
- Cerous nitrate hydrate (Ce $(NO_3)_3$ $6H_2O$) available from Aldrich,
- Potassium permanganate ($KMnO_4$) [0.12 M] available from Aldrich,
- Potassium hydroxide (KOH) available from Aldrich,
- Bi-distilled water ($H_2O$) available from Carlo Erba.

In accordance with the first description of the method of manufacture (m1 protocol), for the preparation of 10g of the catalytic composition $Ce_{0.5}Mn_{0.5}O_x$, the following solutions were prepared:

- Reducing solution: 200mL containing manganous ion ($Mn^{2+}$) in a concentration of 0.08 M and cerous ion ($Ce^{3+}$) in concentration 0.2 M;
- Oxidizing solution: 200mL containing permanganate ion ($MnO^{4-}$) at a concentration of 0.12 M;
- Alkaline solution: 500mL potassium hydroxide (KOH) concentration in 0.2 M;

The oxidizing solution was added to the alkaline solution to obtain a new solution defined solution B. In a slow and continuous way, the reducing solution was added to the solution B, producing the precipitation of metals/semi-metals under strong stirring, while maintaining a constant pH, redox potential of the solution B and rate of administration of the reducing solution to the solution B.

The experimental conditions adopted in the preparation were the following:

- Precipitation pH = 8.0
- Precipitation temperature ($T_p$) = 70 °C
- Initial ionic strength of solution B ($\mu_i$) = 1.04 M
- Redox potential of the oxidizing solution ($E_{oxy}{}^i$) = between 0.88 and 1.00 V
- Rate of addition ($v_r$) of the reducing solution to the solution B equal to about 100mL/h.

After preparation, the sample was washed with distilled water at 90°C until neutralization of the pH of the washing waters and, therefore, placed in an oven for drying at 100 °C for a time of 16 hours. Subsequently, the catalyst was subjected to a calcination treatment in air at 400 °C for 6 hours.

Reference Example 2. Preparation of the composition $Mn_{0.5}Ce_{0.5}O_x$ by Protocol m2. Sample $CM_{m2}$

The materials used for the preparation of the sample $CM_{m2}$ are:

- Manganous nitrate hydrate ($Mn(NO_3)_2 4H_2O$) available from Aldrich,
- Ceric ammonium nitrate ($Ce(NH_4)_2(NO_3)_6$) available from Aldrich,
- Potassium permanganate ($KMnO_4$) available from Aldrich,
- Potassium hydroxide (KOH) available from Aldrich,
- Bi-distilled water ($H_2O$) available from Carlo Erba.

In accordance with the second description of the method of manufacture (protocol m2), for the preparation of 10g of the catalytic composition $Ce_{0.5}Mn_{0.5}O_x$ were prepared by the following solutions:

- Reducing solution: 200mL containing manganous ion ($Mn^{2+}$) in concentration of 0.12 M;
- Oxidizing solution: 100mL containing the permanganate ion ($MnO^{4-}$) in a concentration of 0.16 M;
- Solution of promoters: 100mL containing ceric ion ($Ce^{4+}$) in concentration of 0.4 M.

The oxidizing solution was added to the solution of promoters obtaining a new solution defined A'. In a slow and continuous way, solution A' was added to the reducing solution, producing the precipitation of the oxides under strong stirring, while maintaining a constant pH, by addition of potassium hydroxide (KOH) 0.2 M, and rate of administration of the solution A'.

The experimental conditions adopted in the preparation were the following:

- Precipitation pH = 5.0
- Precipitation temperature ($T_p$) = 70 °C
- Initial ionic strength of solution A' ($\mu_i$) = 0.36 M
- Initial redox potential of reducing solution ($E_{rid}{}^i$) = between 0.67 and 0.42 V
- Rate of addition ($v_a$) of A' solution to reducing solution approximately 100 mL/h

After preparation, the sample was washed with distilled water at 90°C until neutralization of the pH of the washing waters and, then, placed in an oven for drying at 100 °C for a time of 16 hours. Subsequently, the catalyst was subjected to a calcination treatment in air at 400 °C for 6 hours.

Example 3. Preparation of the composition $Ce_{0.4}Zr_{0.1}Mn_{0.5}O_x$ through m1 protocol. Sample $CMZ_{m1}$

The materials used for the preparation of the sample $Mn_{0.5}Ce_{0.4}Zr_{0.1}O_x$ are:

- Manganous nitrate hydrate ($Mn(NO_3)_2 4H_2O$) available from Aldrich,
- Cerous nitrate ($Ce(NH_4)_2(NO_3)_6$) available from Aldrich,
- Zirconyl chloride ($Zr(OH)_2Cl_2 \cdot xH_2O$) available from Aldrich,
- Potassium permanganate ($KMnO_4$) available from Aldrich,
- Potassium hydroxide (KOH) available from Aldrich,

- Bi-distilled water ($H_2O$) available from Carlo Erba.

In accordance with the first description of the method of manufacture (m1 Protocol), for the preparation of 10g of the catalytic composition $Mn_{0.5}Ce_{0.4}Zr_{0.1}O_x$ were prepared by the following solutions:

- Reducing solution: 100mL containing manganous ion ($Mn^{2+}$) in concentration of 0.23 M and cerous ion concentration of 0.26 M;
- Solution of promoters containing 100mL zirconyl ion ($ZrO^{2+}$) concentration of 0.13 M;
- Oxidizing solution: 200mL containing permanganate ion ($MnO^{4-}$) at a concentration of 0.08 M;
- Alkaline solution: 500mL potassium hydroxide (KOH) in concentration of 0.2 M

The reducing solution was added to the solution of promoters obtaining a new solution defined solution A. The oxidizing solution was added to the alkaline solution to obtain a new solution defined solution B. In a slow and continuous way, solution A was added to the solution B, producing the precipitation of the oxides under strong stirring, while maintaining a constant pH, redox potential of the mixture B and rate of administration of the solution A to solution B.

The experimental conditions were adopted in the preparation:

- Precipitation pH = 8.0
- Temperature of precipitation ($T_p$) = 70 °C
- initial ionic strength of solution A ($\mu_i$) = 0.16 M
- Initial redox potential of the oxidizing solution (E oxy$^{i)}$) = between 0.88 and 1.00 V
- Rate of addition ($v_a$) of solution A to solution B of approximately 100 mUh

After preparation, the sample was washed with distilled water at 90 °C until neutralization of the pH of the washing waters and, therefore, placed in an oven for drying at 100 °C for a time of 16 hours. Subsequently, the catalyst was subjected to a calcination treatment in air at 400 °C for 6 hours.

Example 4. Preparation of the composition $Ce_{0.3} Ti_{0.3} Mn_{0.4} O_x$ through m1 protocol. Sample CMT $_{m1}$

The materials used for the preparation of the sample $Mn_{0.4}Ce_{0.3}Ti_{0.3}O_x$ are:

- Manganous nitrate hydrate ($Mn(NO_3)_2 \cdot 4H_2O$) available from Aldrich,
- Cerous nitrate ($Ce(NH_4)_2(NO_3)_6$) available from Aldrich,
- Titanoso chloride ($TiCl_{3)}$ available from Aldrich as a 10% solution by weight in HCl to 20-30%,
- Potassium permanganate ($KMnO_{4)}$ available from Aldrich,
- Potassium hydroxide dropwise (KOH) available from Aldrich,
- Bi-distilled water ($H_2O$) available from Carlo Erba.

In accordance with the first description of the method of manufacture (m1 Protocol), for the preparation of 10g of the catalytic composition $Mn_{0.4}Ce_{0.3}Ti_{0.3}O_x$ were prepared by the following solutions:

- Reducing solution: 100mL containing manganous ion ($Mn^{2+}$) concentration in 0.13 M and cerous ion ($Ce^{3+}$) in concentration 0.26 M;
- Solution of promoters containing 100mL titanoso ion ($Ti^{3+}$) in concentration 0.26 M;
- Oxidizing solution: 200mL containing permanganate ion ($MnO_4^-$) concentration in 0.125 M;
- Alkaline solution: 500mL potassium hydroxide (KOH) in a concentration of 1.5 M.

The reducing solution was added to the solution of promoters obtaining a new solution defined solution A. The oxidizing solution was added to the alkaline solution to obtain a new solution defined solution B. In a slow and continuous, solution A was added to the solution B, producing the precipitation of the oxides under strong stirring, while maintaining constant pH, redox potential of the mixture B and rate of administration of the solution A to solution B.

The experimental condizi oni taken in the preparation were:

- Precipitation pH = 8.0
- Precipitation temperature (T p) = 80 °C
- The initial ionic strength of solution B ($\mu_i$) = 0.25 M
- The initial redox potential of the oxidizing solution ($E_{oxy}^{i)}$) = between 0.88 and 1.00 V
- Rate of addition ($v_{a)}$) of solution A to solution B of approximately 100 mUh

After preparation, the sample was washed with distilled water at 90 °C until neutralization of the pH of the washing water and then placed in an oven for drying at 100 °C for a time of 16 hours.Subsequently, the catalyst was subjected to a calcination treatment in air at 400 °C for 6 hours.

Chemical and physical properties

Example 5.

Observation and scansion electron microscopy (SEM: Scanning Electron Microscopy) at low magnification, the powder of the catalytic compositions of the present invention appear as macro particle aggregates of square shape, the size on average between 50 and 150 $\mu$m completely different from the equivalent coprecipiatati powder, consisting of excessively fine particles (5-20 $\mu$m). At high magnifications, the catalytic compositions of the present invention appear to consist of particles nanoscopic h and spherical in shape, never previously observed for these compounds. As evidence of this, the SEM images of Figures 1A, 1A ', 1B, 1B' show the different morphology of the sample CM $_{m1}$ (Composition $Ce_{0.5}Mn_{0.5}O_x$) with respect to that of a similar catalyst composition prepared by conventional co-precipitation [Appl. Catalysis. B: Environmental, 32 (2001) 195], shown here as a benchmark. The images at low magnification, Figure 1A, demonstrate that the composition of $Mn_{0.5}Ce_{0.5}O_x$ ($_{M1}$ sample CM) consists of medium to large structures, forms rather regular and clearly sharp (sharp edges). The geometry of these structures demonstrates the great cohesion of the particles that make up the composition $Mn_{0.5}Ce_{0.5}O_x$ (Sample $CM_{m1}$), prefiguring the orderly development of the material. In contrast, the SEM image of Figure 1 B shows the total absence of reference in the catalyst of ordered structures, whether they are large or small or in any case greater than 0.5 microns. The absence of ordered structures in the catalyst prepared by coprecipitation, shows the limitations of the same fabrication technique, where the materials are to be realized for chaotic aggregation and precipitation of ions in solution, which give rise to granule size and uncontrollable variables, which aggregate into lamellar structures. The high-magnification SEM image shown in Figure 1A 'highlights the nanoscopic structure of the composition $Mn_{0.5}Ce_{0.5}O_x$ (Sample $CM_{m1}$), consisting of nano-homogeneous spheres of average diameter of 20nm. The nano-spheres are linked to each other to form a plot full of voids, which gives great porosity to the material. Otherwise, the image of Figure 1B 'of the material coprecipitate shows a compact structure, characterized by a flat surface, laminar and free of porosity.

Example 6

The mesoporous structure of the catalytic composition object of the present invention has been demonstrated by physisorption of nitrogen ($N_2$) at a temperature of 77K. As demonstrated by the graph of Figure 2, the adsorption isotherm of the sample CM $_{m1}$ (Composition of $Mn_{0.5}Ce_{0.5}O_x$) is the "type IV".

This type of isotherm connotes the mesoporous materials according to the classification of Brunauer, Deminge, Deming and Teller. In particular, this material shows a process of adsorption of type "Langmuir" until the relative pressure (P/P °) of approximately 0.25 , at which one observes the maximum overlap of the surface resulting in the formation of a *monolayer* (the point m), ie the formation of a single layer of nitrogen adsorbed on the entire surface. For successive increments of the pressure (P/P = .25 to .55 °), on the surface of the catalytic composition are deposited several layers of nitrogen (the coating of type multilayer adsorption) of highest pressure that lead to the capillary condensation (liquefaction) gas inside the pores, as evidenced by the presence of the hysteresis loop.

Example 7

The graph of Figure 3 describes the distribution of the composition porosimetrica $Mn_{0.5}Ce_{0.5}O_x$ (Sample CM $_{m1)}$. Eighty percent of the voids of the composition is due to meso-pores, 75% of these has a diameter of between 7-11 Nm. 10% of the total porosity is due to the presence of macro-pores with a diameter of 60-70nm. The composition of $Mn_{0.5}Ce_{0.5}O_x$ (Sample CM $_{m1}$) shows a structure porosimetrica homogeneous and extremely uniform, demonstrating the good results obtained with the technique of manufacture of the present invention.

Example 8

The graph of Figure 4 shows the relationship which correlates the size of the nanospheres with the content of cerium in the composition object of the present invention. The data refer to catalytic compositions consisting predominantly (> 95%) from compounds of cerium (Ce) and manganese (Mn). The report indicates a progressive reduction of the diameter of the nano-spheres with increasing atomic fraction of cerium $_{(Ce\ x)}$ in the catalytic composition, according to the sigmoidal trend described in Figure 4.

## Example 9

The graph of Figure 5 shows the two reports that correlate the size of the nano-spheres to superfiale area and diameter of the pores of the composition Catal itiche object of the present invention. The data refer to catalytic compositions consisting predominantly (> 95%) from compounds of cerium (Ce) and manganese (Mn). The reports indicate that, as the size of the nano-spheres, consequently increases the average diameter of pores and decreases the total surface area of the catalytic compositions, according to the linear trend indicated in figure 5.

## Example 10

The graph of Figure 6 shows an exemplary schematic that describes the mechanism of growth and the concatenation of the nano-spheres from which originates the structure of the catalytic compositions of the present invention.
The pattern correlates the development of the structure of the catalytic composition with the control of certain parameters related to the fabrication technique described in the present invention. In particular, the schema describes the growth of nano-spheres with increasing atomic ratio of manganese/cerium ($Mn_{at}/Ce_{at}$) in the catalytic composition.

## Example 11

The graph of Figures 7A, 7B, 7C, 7D illustrates schematically the various stages which lead to the realization of the meso-porous structure of the catalytic compositions of the present invention. Figure 7A shows the SEM picture depicting the surface texture of the sample $CM_{m1}$ (Composition of $Mn_{0.5}Ce_{0.5}O_x$).
The image of Figure 7B describes the initial phase of the realization of meso-porous structure of the catalytic compositions, where the aggregation of the two-dimensional nano-spheres equi-dimensional leads to a first structure from the surface rather regular. This first structure is characterized by the presence of intergranular empty packing, or the areas in which, for geometric reasons, not realized the contact between the nano-spheres. Always for geometrical reasons, the size of the voids of packing will vary with the size of the nano-spheres and their concatenation. The figure shows the presence of intergranular voids narrow, 2-20nm in diameter (indicated by the reference to "s"), medium (20-50nm diameter, reference "m") and large (diameter greater than 50nm, the reference "a").
The image of Figure 7C describes the phase in which, for subsequent processes of stratification and concatenation, the initial structure is three-dimensionally increases, leading to the formation of incipient channels rather regular, with meso-pores "mp" of diameter between 2 and 50nm and macro-pores "MP" in diameter greater than 50nm. The image of Figure 7D describes the consolidation phase of the meso-porous structure, which leads to the formation of meso-pores "mp" from the size extremely uniform. This scheme makes proof of the good results obtained with the new manufacturing technique that, through the direct control of the size of the nano-spheres, delivers specific catalytic compositions by weaving, tailoring/optimizing them to the diverse needs of industrial practice.

## Example 12

The bar graph of Figure 8 shows the comparison of the adsorption of phenol of the sample $CM_{m1}$ (Composition $Ce_{0.5}Mn_{0.5}O_x$) with respect to that reported by a similar composition prepared by conventional co-precipitation [Appl. Catalysis. B: Environmental, 32 (2001) 195] and from other systems based on ceria ($CeO_2$) and noble metals (ie, Ru, Pd, Pt,) prepared according to what reported in the literature [Topics Catal., 33 (2005) 77], measured after 5 minutes of contact with an aqueous solution containing 1000 ppm of phenol. The adsorption test was conducted at 100 °C and 14atm. The graph indicates that, in just 5 minutes, the catalyst composition $Mn_{0.5}Ce_{0.5}O_x$ (M1 sample CM) is capable of removing from the solution by adsorption to a quantity of phenol equal to 45% of its weight, while the equivalent catalyst coprecipitate [Appl. Catalysis. B: Environmental, 32 (2001) 195] removes a quantity of phenol which is four times lower than that of the sample $CM_{m1}$. The removal operated by other catalysts based on ceria ($CeO_2$) and noble metals is also ten times lower than that of the sample $CM_{m1}$.

## Example 13

The two graphs of Figures 9A and 9B show the adsorption isotherms (T = 299K, P <400mbar) of vapors of methyl-tert-butyl ether (MTBE), respectively obtained with the sample $CM_{m1}$ (Composition $Ce_{0.5}Mn_{0.5}O_x$) and a sample of commercial zeolite adsorbent highly (de-aluminated zeolite Y type, available from Zeolyst CBV with code 901; SA 780 $m^2$/g; APD 0.7 nm) recently tested successfully in the removal of some organic pollutants contained in urban waste water. The zeolite in Figure 9B shows an adsorption of type "I", which confirms the structure of this micro-porous zeolite. The zeolite reaches the maximum saturation in MTBE to the partial pressure (P/Ps) of 0.8 with a value of accumulation of 0.15 grams of MTBE per gram of zeolite.

The adsorption isotherm of MTBE composition of $Mn_{0.5}Ce_{0.5}O_x$ (Sample CM $_{m1)}$ shown in Figure 9A is rather like "IV" on confirmation of the meso-porous structure of this composition. The catalytic composition reaches the maximum saturation in MTBE to a value of less than 400mbar pressure (P/Ps> 0.8), being able to store within the pores of its structure 0.47 grams of MTBE per gram of composition, which is three times greater than the storage capacity of the zeolite commercial.

Example 14

Figure 10 shows a photo HR-TEM which describes the structure of the sample CM $_{m1}$ (Composition of $Mn_{0.5}Ce_{0.5}O_x$). HR-TEM image are immediately observable aggregates DNC crystalline phase, consisting of "crystallites" dimeter with less than 6nm and an average of 2-3nm, which assume various lattice orientations. The lattice distances measured prove the symmetry crystalline cerium oxide of the invention. The phase DNC is dispersed homogeneously in the glassy phase (MSV), consisting of sub oxides of manganese cations that also incorporate trivalent and tetravalent cerium.

Example 15

Figures 11 A and 11 B show the diffraction pattern of six catalytic compositions characterized by a different content of cerium. The reflections of X-ray diffraction were collected respectively in zones 20-38 (Figure 11 A) and 40-68 degrees 2theta (Figure 11 B). The catalytic compositions have a content of cerium in terms of atomic fraction ($_{X Ce)}$, which varies between 0.27 and 0.75. As can be seen, all the samples show two broad diffraction peaks, asymmetric and amplitude of 16-18 degrees, placed at about 30 °and 48 °2theta, the intensity of which grow with the increase of the content of cerium in st they compositions.

Example 16

Figures 12A and 12B show the results of the deconvolutive analysis of the diffraction pattern of the area 20-38 degrees 2theta of two catalytic compositions, having atomic fraction of cerium $_{(Ce X)}$ respectively of 0.27 and 0, 75. The results of the deconvolutive analysis show that the peak at 30 degrees 2theta is given by the combination/linear superposition (convolution) of the signals XRD due to the reflection of X-ray crystal planes on cerium oxide (step DNC) and the "scattering" phase of the "glassy" (step MSV). In particular, the mathematical deconvolution indicates the presence of three peaks in the area 20-38 degrees 2theta, respectively centered at about 28.6, 30.2 and 33.0 degrees 2theta. The peaks at 28.6 and 33.0 respectively respond to the reflection of X-ray crystallographic cerium oxide on the faces of the invention to Miller indices respectively <111> and <200>. The highest peak flared, to 30.2 degrees 2theta place, is the result of the effects of scattering of radiation by the mixture glassy solid (MSV).
Moreover, the intensity of the reflections crystalline <111> and <200> is greater in the catalytic composition to greater atomic fraction of cerium $_{(Ce X}$ = 0.75).

Example 17

Figure 13 shows the correlation which describes the increase of the fraction of area on the XRD phase DNC the increase of the atomic fraction of cerium $_{(Ce X)}$. The value of relative crystalline fraction (FCR) was estimated as area ratio relative to the XRD peaks cerium oxide ($CeO_x$, $1.5 \leq x \leq 2.0$) divided by the total area XRD. This result demonstrates that the content of cerium is a decisive factor in the control of the phase DNC.

Example 18

Figure 14 shows the trend of a relative concentration of Mn in the surface layers ($Mn_{Surface}/Mn_{bulk}$) varying the atomic fraction of manganese in the compositions ($_{X Mn)}$. The results refer to the catalytic compositions prepared with different content of Mn with the tecnic to the present invention (upper curve) and to similar compositions shown in the recent literature [Appl. Catalysis. B: Environmental, 32 (2001) 195] and used here as reference (lower curve). Figure 14 shows how, regardless of the content of manganese, the catalytic compositions of the present invention exhibit a higher concentration of manganese in the surface layers with respect to the internal ones ($Mn_{surface}/Mn_{bulk}$> 1). Otherwise, the compositions of reference demonstrate an increased concentration of manganese in the layers of bulk ($Mn_{surface}/Mn_{bulk}$ <1). This difference becomes greater when the content of manganese in the catalytic composition is very low, tending progressively to shrink for loads of manganese increasingly high. The difference is of course nothing when the material is made from a single component ($_{X Mn}$ = 1).

Example 19

Figure 15 shows the trend of the surface area relative of manganese, calculated as the product of the atomic fraction of the manganese and the total surface area [(Mn $_{at}$/(Mn + Ce at at))· SA BET], the variation of atomic fraction of manganese in the compositions ($_{X\ Mn)}$. The results refer to the catalytic compositions prepared with different content of Mn with the technique of the present invention (upper curve) and similar compositions provided in recent read temperature [Appl. Catalysis. B: Environmental, 32 (2001) 195] and used here as reference (lower curve). Figure 15 shows how the highest concentration of manganese in the surface layers, combined with the greater total surface area of the catalytic compositions of the present invention, the face so that they exhibit a greater area than that of equivalent catalytic compositions reported in the literature.

Example 20

Figures 16A and 16B show the "chemistry mapping" an area of 10$\mu$m x 10$\mu$m of the sample surface CM $_{m1}$ (Composition of $Mn_{0.5}Ce_{0.5}O_{x)}$. The result of the scan XPS shows the distribution "perfectly uniform" of the atoms of cerium (Ce) and manganese (Mn) in the surface layers. The surface of the sample CM $_{m1}$ consists for 58% of manganese and cerium cations for the remaining 42%, with a deviation of $\pm$ 4% compared to the average. This result also reveals that the sample CM $_{m1}$ (Composition of $Mn_{0.5}Ce_{0.5}O_{x)}$ Mn present in the surface layers is about 1.4 times greater than the inner layers.

Example 21

In the images of Figures 17A and 17B are shown the results of ESCA measurements and SEM obtained from scans of the surface very "narrow" (1000nm 1000nm x) of the sample surface CM $_{m1}$. The chemical map shows areas with the highest concentration of cerium (gray areas), comprising the step DNC, and areas with the highest concentration of manganese (dark gray areas), comprising the step MSV. The perimeter areas which constitute the interface surfaces (or contact) between the phases DNC and MSV are medium-pitch (gray 50-60%), including the areas in which the interaction between cerium (Ce) and manganese (Mn) occurs at the level "ionic", through the creation of oxygen bridges [-Mn-OCE-].

By comparing the SEM image of the texture (Figure 17B) with that of chemical map (Figure 17A), shows that the nano-spheres that make up this catalyst composition are statistically equivalent in size and composition.

Applications in process of removal of pollutants by adsorption and oxidation

Example 22

The graph of Figure 18 shows a comparison between the catalytic performance of the sample CM $_{m2}$ in the reaction of the phenol CWAO compared to those of a similar reference composition, prepared by conventional co-precipitation [Appl. Catalysis. B: Environmental, 32 (2001) 195], and from other systems based on ceria (CeO $_{2)}$ and noble metals (ie, Ru, Pd, Pt,) known in the literature [Topics Catal., 33 (2005) 77]. The catalytic results are expressed in terms of residual concentration of phenol and total organic carbon (TOC), obtained after 15 minutes of reaction. The catalytic tests were conducted at 160 °C temperature, the total pressure of 14 atm (oxygen 9 atm) and with a ratio catalyst/phenol equal to 2. The data confirm the best catalytic performance of sample CM $_{m2}$ in the reaction of CWAO of phenol, which gets the practically complete removal of the phenol and the TOC after only 15 minutes, compared with about half obtained by the conventional catalyst performance significantly below and above systems based on ceria (CeO $_{2)}$ and noble metals.

Example 23

The graph of Figure 19 shows a comparison between the catalytic performance of the sample CM$_{m1}$ in the reaction of the phenol CWAO compared to those of a similar reference composition, prepared by conventional co-precipitation [Appl. Catalysis. B: Environmental, 32 (2001) 195], in terms of selectivity to CO $_2$ after 6 hours of reaction. The catalytic tests were conducted at 130 °C and 150 °C temperature, 12 and 14 atm total pressure (oxygen 9 atm) and with a ratio catalyst/phenol equal to 5. The data demonstrate the improved selectivity to CO $_2$ Sample CM $_{m2}$ compared to the reference sample, both at 130 °C to 150 °C.

Example24

The graph of Figure 20 shows a comparison between the catalytic performance of the sample $CM_{m2}$ in the reaction of CWAO of acetic acid compared to those of a similar reference composition prepared by conventional co-precipitation [Appl. Catalysis. B: Environmental, 32 (2001) 195]. The catalytic results are expressed in terms of conversion of acetic acid and selectivity to $CO_2$ after 30 minutes of reaction. The catalytic tests were conducted at 150 °C temperature, the total pressure of 14 atm (oxygen 9 atm) and a ratio catalyst/phenol equal to 10. The data confirm the best catalytic performance of sample $CM_{m2}$ both in terms of conversion of acetic acid and selectivity to $CO_2$, which are almost double compared to the catalyst of reference.

Example 25

The graph of Figure 21 shows the results obtained from the sample CM m1 in the removal of cyanide and copper ions present in industrial waste water treatment of metal surfaces. The test was conducted at atmospheric pressure, contacting the solution with the sample at a temperature of 70 °C, using a ratio sample/solution equal to one. The test results show that the sample $CM_{m2}$ is able to effectively remove both the pollutants in about 6 hours.

Example 26

Figure 22 shows the results of a test run on eco-toxicological industrial waste water polluted treated at 70 °C for 6 hours with the sample $CM_{m1}$. In particular, the graph shown in Figure 22 shows the average growth to 7 days as measured on two separate groups of 45 plants respectively irrigated with industrial wastewater polluted with heavy metals and cyanides, and with the same water after the purification treatment. The rate of growth of lettuce plants is 10 times higher irrigating the sprouts with water treated with the catalyst $CM_{m1}$ compared to those irrigated with untreated water, demonstrating that the catalyst $CM_{m1}$ effectively removes the main substances toxic to plants (heavy metals, cyanides, etc..), generally present in this type of industrial waste.

**Claims**

1. Nano-structured composite material based on compositions of manganese and cerium, composed of aggregated composite nanospheres, ranging in size from 1 to 40nm, of ultrafine crystalline nanoparticles of one or more compounds of cerium, dispersed in a metastable solid mixture of one or more sub-stoichiometric oxides of manganese, **characterised in that** said sub-stoichiometric oxides of manganese comprise $MeMnO_z$ manganates, wherein $1 \leq z \leq 4$, Me being constituted of one or more elements selected amongst alkali metals, alkaline earth metals, transition metals and rare earths, with the exception of Mn.

2. Composite material according to claim 1, **characterised in that** said manganates comprise bivalent manganese (MnII), trivalent manganese (MnIII), tetravalent manganese (MnIV), exavalent manganese (MnVI) and eptavalent manganese (MnVII) or mixtures thereof, preferably in an amount of at least 25% and not more than 75% of the total weight of the material and most preferably in an amount comprised in the range 45-55% of the total weight of the material.

3. Composite material according to any of the previous claims, **characterised in that** Me is selected amongst Ce, V, Ti, Cr, Fe, Cu, Zn, Sn, Ga, Gd, Y, Zr, Al, Si, La, K, Li, Pb, Cs, or mixtures thereof, preferably amongst Ti, Zr, Ce or mixtures thereof and most preferably is Ce.

4. Composite material according to any of the previous claims, **characterised in that** said manganates are present in an amount of at least 1% and not more than 35% of the total weight of the compound of manganese and preferably in an amount comprised in the range 10-15% of the total weight of the compound of manganese.

5. Composite material according to any of the previous claims, **characterised in that** said compounds of cerium are $CeO_x$ nanocrystalline oxides, wherein $1.5 \leq x \leq 2.0$, or solid solutions thereof with vicariant elements, in the form of ultrafine crystalline particles, with a diameter of 1-10nm.

6. Composite material according to claim 5, **characterised in that** said $CeO_x$ nanocrystalline oxides are present in an amount of at least 20% and not more than 85% of the total weight of the material and preferably in an amount comprised in the range 50-60% of the total weight of the material.

7. Composite material according to any of the previous claims, **characterised in that** said compounds of cerium comprise compounds of cerium which function as electronic/structural promoters, chosen amongst oxides ($CeO_2$; $Ce_2O_3$), ceric peroxide ($Ce$-$H_2O$-$O_2$), ceric fluoride ($CeF_4$), ceric sulphate [$Ce(SO_4)_2$], ceric ammonium nitrate [$(NH_4)_2Ce(NO_3)_6$], ceric ammonium sulphate [$(NH_4)_2Ce(SO_4)_3$], hexa-chloro ceric ammonium [$(NH_4)_2CeCl_6$], cerous peroxide [$Ce$-$H_2O$-$H_2O_2$], cerous basic carbonate [$CeOHCO_3$], cerous hydroxide [$Ce(OH)_3$], cerous carbonate [$Ce_2(CO_3)_3 \cdot nH_2O$], cerous oxycarbonate [$Ce_2O_2(CO_3)$], cerous phosphate [$CePO_4 \cdot H_2O$], cerous fluoride [$CeF_3$], cerous oxyfluoride [$CeOF$], cerous sulphate [$Ce_2(SO_4)_3$], cerous sulfide [$Ce_2S_3$], cerium oxysulfide [$Ce_2O_2S$], cerous nitrate [$Ce(NO_3)_3 \cdot 6H_2O$], cerous chloride [$CeCl_3$], cerous oxychloride [$CeOCl$], cerous bromide [$CeBr_3$] or mixtures thereof, preferably in an amount comprised in the range 2-40% of the total weight of the material and most preferably in an amount comprised in the range 10-20% of the total weight of the material.

8. Composite material according to any of the previous claims, **characterised in that** it additionally comprises an electronic/structural promoter chosen amongst alumina, silica, titania, germania, zirconia, aluminosilicates, zirconil-silicates, chromium oxides, copper oxides, molybdenum oxides, tantalum oxides, zinc oxides, yttrium oxides, vanadium oxides, iron oxides and mixtures thereof.

9. Composite material according to any of the previous claims, **characterised in that** it has a mesoporous structure, with pores with diameter comprised between 5 and 50nm, wherein preferably 80% of the diameter of the pores has values of relative standard deviation (RSD) lower than 0.2.

10. Composite material according to any of the previous claims, **characterised in that** it has a higher concentration of manganese ions in the surface layers than in internal ones, with values of the atomic ratio of manganese on the surface with respect to the inner layers varying between 1.1 and 1.5.

11. Composite material according to any of the previous claims, **characterised in that** it has high surface density of redox sites and acid-base sites, with values that are greater than 1.0 $\mu$moli/m$^2$.

12. Process for the production of a nano-structured composite material based on compositions of manganese and cerium as defined in claims 1-11, **characterised in that** it comprises the following steps:

- preparation of a reducing solution obtained by dissolution, in water or in water/solvent mixture, of salts and soluble compounds of divalent manganese ($Mn^{II}$, trivalent cerium ($Ce^{III}$) and other metallic elements (Me) capable of generating redox couples;
- preparation of a solution of promoters, obtained by dissolution, in water or in a water/solvent mixture, of salts and soluble compounds being precursors of electronic/structural promoters;
- mixing said reducing solution and said solution of promoters, until obtaining a solution A;
- preparation of an oxidising solution, obtained by dissolving strong oxidizing chemical compounds in water;
- preparation of an alkaline solution, obtained by dissolving an alkaline agent (inorganic and organic bases) in water;
- mixing the oxidising solution with the alkaline solution, until obtaining a new solution defined solution B, with pH>7 and oxidising potential E>+0.80V;
- dropping solution A to solution B, under stirring, keeping constant pH and oxidising potential of solution B and rate of administration of the reducing solution;
- ageing and thickening of the forming precipitate and subsequent removal by filtration of the precipitate from the solution;
- washing filtrate and subsequent drying;
- final consolidation of the structures of the precipitates and decomposition of any salts/hydroxides/carbonates/hydroxy-carbonates by thermal treatment.

13. Process for the production of a nano-structured composite material based on compositions of manganese and cerium as defined in claims 1-11, **characterised in that** comprises the following steps:

- preparation of a reducing solution obtained by dissolution, in water or in water/solvent mixture, of salts and soluble compounds of divalent manganese ($Mn^{II}$), trivalent cerium ($Ce^{III}$) and other metallic elements (Me) capable of generating redox couples, with pH comprised between 4 and 5 and high reducing potential E<0.70V;
- preparation of a solution A', i. e. an oxidising solution, obtained by dissolving strong oxidizing chemical compounds in water;
- dropping solution A' into the reducing solution, under stirring, keeping constant pH and oxidising potential of the reducing solution and the rate of administration of solution A';

- ageing and thickening of the forming precipitate and subsequent removal by filtration of the precipitate from the solution;
- washing filtrate and subsequent drying;
- final consolidation of the structures of the precipitates and decomposition of any salts/hydroxides/carbonates/hydroxy-carbonates by thermal treatment and preferably additionally comprises the following steps, preceding the mixing steps:
- preparation of a solution of promoters, obtained by dissolution, in water or in a water/solvent mixture, of salts and soluble compounds being precursors of electronic/structural promoters;
- mixing said oxidising solution and said solution of promoters, until obtaining a modified solution A';

the remaining steps being unchanged.

14. Use of a nano-structured composite material based on compositions of manganese and cerium as defined in claims 1-11, in the removal of pollutants which are presents in liquid or gas phases, through adsorption and oxidation.

15. Use of a nano-structured composite material based on compositions of manganese and cerium as defined in claims 1-11, in the adsorption of heavy metals, cyanides, sulfur compounds and various classes of industrial organic compounds such as: pigments and dyes, polymers (PEG), phenols, alcohols, aldehydes and ketones, ethers, esters and carboxylic acids.

16. Use of a nano-structured composite material based on compositions of manganese and cerium as defined in claims 1-11, in the oxidation with air/oxygen and low temperature (60-160°C) of cyanides and various classes of industrial organic compounds such as pigments and dyes, polymers (PEG), phenols, alcohols, aldehydes and ketones, ethers, esters and carboxylic acids.

17. Use of a nano-structured composite material based on compositions of manganese and cerium as defined in claims 1-11 in the environmental field, as an adsorbing filter and oxidation catalyst, for low-temperature (60-160 °C) removal of molecules of pollutants such as heavy metals, cyanides, sulfur compounds, pigments, dyes, polymers (PEG), phenols, alcohols, aldehydes and ketones, ethers, esters and carboxylic acids which are present both in contaminated water and in gas streams.

18. Use of a nano-structured composite material based on compositions of manganese and cerium as defined in claims 1-11 as oxidation catalyst in fixed bed reactors (plug flow reactor (PFR), trickled bed reactor (TBR), packed bubble column (PEC)) or a fluidised bed reactors (three-phase fluidized bed (TPFB), slurry bubble column (SBL)).

19. Use of a nano-structured composite material based on compositions of manganese and cerium as defined in claims 1-11 in the removal of pollutants such as cyanides, sulfur compounds, pigments, dyes, polymers (PEG), phenols, alcohols, aldehydes and ketones, ethers, esters and carboxylic acids, which are present both in contaminated or process waters and in gas streams.

20. Process for the removal of pollutants by means of a nano-structured composite material based on compositions of manganese and cerium as defined in claims 1-11, comprising a two-stage treatment wherein the composite material has the dual role of adsorbing filter and oxidation catalyst, and operates in a combined and alternating manner and preferably said two-stage treatment provides for, in sequence:

- a first step in which the polluting molecules which are present in waters or gas streams are retained/removed at low temperature (<60°C) on filters of said composite material until their saturation, and
- a second step of oxidation of the pollutants adsorbed onto said composite material, operated with pre-heated air, for the regeneration of the filter.

**Patentansprüche**

1. Nanostrukturiertes Kompositmaterial auf der Basis von Zusammensetzungen von Mangan und Cer, welches aus aggregierten Komposit-Nanosphären, im Größenbereich von 1 bis 40 nm, von ultrafeinen kristallinen Nanopartikeln aus einer oder mehreren Cerverbindung(en), die in einer metastabilen festen Mischung von einem oder mehreren substöchiometrischen Manganoxid(en) dispergiert sind, aufgebaut ist, **dadurch gekennzeichnet, dass** die substöchiometrischen Manganoxide Manganate MeMnO$_z$ umfassen, wobei $1 \leq z \leq 4$, Me ein oder mehrere Elemente, das bzw. die aus Alkalimetallen, Erdalkalimetallen, Übergangsmetallen und seltenen Erden, mit Ausnahme von Mn, ausgewählt ist bzw. sind, darstellt.

2. Kompositmaterial nach Anspruch 1, **dadurch gekennzeichnet, dass** die Manganate zweiwertiges Mangan (Mn(II)), dreiwertiges Mangan (Mn(III)), vierwertiges Mangan (Mn(IV)), sechswertiges Mangan (Mn(VI)) und siebenwertiges Mangan (Mn(VII)) oder Mischungen davon umfassen, vorzugsweise in einer Menge von mindestens 25 % und nicht mehr als 75 % des Gesamtgewichts des Materials und am meisten bevorzugt in einer Menge im Bereich von 45 bis 55 % des Gesamtgewichts des Materials.

3. Kompositmaterial nach irgendeinem der vorhergehenden Ansprüche, **dadurch gekennzeichnet, dass** Me aus Ce, V, Ti, Cr, Fe, Cu, Zn, Sn, Ga, Gd, Y, Zr, Al, Si, La, K, Li, Pb, Cs oder Mischungen davon ausgewählt ist, vorzugsweise aus Ti, Zr, Ce oder Mischungen davon, und am meisten bevorzugt Ce ist.

4. Kompositmaterial nach irgendeinem der vorhergehenden Ansprüche, **dadurch gekennzeichnet, dass** die Manganate in einer Menge von mindestens 1% und nicht mehr als 35 % des Gesamtgewichts der Manganverbindung und vorzugsweise in einer Menge im Bereich von 10 bis 15 % des Gesamtgewichts der Manganverbindung vorliegen.

5. Kompositmaterial nach irgendeinem der vorhergehenden Ansprüche, **dadurch gekennzeichnet, dass** die Cerverbindungen nanokristalline Oxide CeO$_x$ sind, wobei $1,5 \leq x \leq 2,0$, oder feste Lösungen davon mit vikarianten Elementen, in Form von ultrafeinen kristallinen Partikeln mit einem Durchmesser von 1 bis 10 nm.

6. Kompositmaterial nach Anspruch 5, **dadurch gekennzeichnet, dass** die nanokristallinen Oxide CeO$_x$ in einer Menge von mindestens 20 % und nicht mehr als 85 % des Gesamtgewichts des Materials und vorzugsweise in einer Menge im Bereich von 50 bis 60% des Gesamtgewichts des Materials vorliegen.

7. Kompositmaterial nach irgendeinem der vorhergehenden Ansprüche, **dadurch gekennzeichnet, dass** die Cerverbindungen Verbindungen von Cer umfassen, welche als elektronische/- strukturelle Promotoren fungieren, ausgewählt aus Oxiden (CeO$_2$; Ce$_2$O$_3$) , Cer (IV)-peroxid (Ce-H$_2$O-O$_2$), Cer (IV) -fluorid (CeF$_4$), Cer(IV)-sulfat [Ce(SO$_4$)$_2$], Ammoniumcer(IV) -nitrat [(NH$_4$)$_2$Ce(NO$_3$)$_6$], Ammoniumcer (IV) -sulfat, [(NH$_4$)$_2$Ce (SO$_4$)$_3$], Ammoniumhexachlorocerat (IV) [NH$_4$)$_2$CeCl$_6$], Cer(III)-peroxid [Ce-H$_2$O-H$_2$O$_2$], basisches Cer(III)-carbonat [CeOHCO$_3$], Cer(III)-hydroxid [Ce(OH)$_3$], Cer(III)-carbonat [Ce$_2$(CO$_3$)$_3$· nH$_2$O], Cer(III)-oxycarbonat [Ce$_2$O$_2$(CO$_3$)], Cer(III)-phosphat [CePO$_4$ · H$_2$O], Cer(III)-fluorid [CeF$_3$], Cer(III)-oxyfluorid [CeOF], Cer(III)-sulfat [Ce$_2$(SO$_4$)$_3$], Cer(III)-sulfid [Ce$_2$S$_3$], Ceroxysulfit [Ce$_2$O$_2$S], Cer(III)-nitrat [Ce(NO$_3$)$_3$ · 6H$_2$O], Cer(III)-chlorid [CeCl$_3$], Cer(III)-oxychlorid [CeOCl], Cer(III)-bromid [CeBr$_3$] oder Mischungen davon, vorzugsweise in einer Menge im Bereich von 2 bis 40 % des Gesamtgewichts des Materials und am meisten bevorzugt in einer Menge im Bereich von 10 bis 20 % des Gesamtgewichts des Materials.

8. Kompositmaterial nach irgendeinem der vorhergehenden Ansprüche, **dadurch gekennzeichnet, dass** es zusätzlich einen elektronischen/strukturellen Promotor umfasst, der aus Aluminium(III)-oxid, Siliciumdioxid, Titandioxid, Germaniumdioxid, Zirconiumdioxid, Aluminosilikaten, Zirkonylsilicaten, Chromoxiden, Kupferoxiden, Molybdänoxiden, Tantaloxiden, Zinkoxiden, Yttriumoxiden, Vanadiumoxiden, Eisenoxiden und Mischungen davon ausgewählt ist.

9. Zusammensetzung nach irgendeinem der vorhergehenden Ansprüche, **dadurch gekennzeichnet, dass** sie eine mesoporöse Struktur mit Poren eines Durchmessers zwischen 5 und 50 nm aufweist, wobei vorzugsweise 80 % der Porendurchmesser Werte der relativen Standardabweichung (RSA) von weniger als 0,2 aufweist.

10. Kompositmaterial nach irgendeinem der vorhergehenden Ansprüche, **dadurch gekennzeichnet, dass** es in den Oberflächenschichten eine höhere Konzentration an Mangananionen als in den inneren Schichten aufweist, wobei die Werte des Atomverhältnisses von Mangan an der Oberfläche zu dem in den inneren Schichten zwischen 1,1 und 1,5 variieren.

11. Kompositmaterial nach irgendeinem der vorhergehenden Ansprüche, **dadurch gekennzeichnet, dass** es eine hohe Oberflächendichte von Redox-Plätzen und Säure-Base-Plätzen aufweist, mit Werten, die größer als 1,0 $\mu$mol/m$^2$ sind.

12. Verfahren zur Herstellung eines nanostrukturierten Kompositmaterials auf der Basis von Zusammensetzungen von Mangan und Cer wie in den Ansprüchen 1 bis 11 definiert, **dadurch gekennzeichnet, dass** es die folgenden Schritte umfasst:

- Herstellen einer reduzierenden Lösung, welche durch Auflösen von Salzen und löslichen Verbindungen von zweiwertigem Mangan (Mn$^{II}$), dreiwertigem Cer (Ce$^{III}$) und anderen metallischen Elementen (Me), welche zur Bildung von Redoxpaaren in der Lage sind, in Wasser oder in einer Wasser/LösungsmittelMischung erhalten wird;

- Herstellen einer Lösung von Promotoren, welche durch Auflösung von Salzen und löslichen Verbindungen, die Vorläufer von elektronischen/strukturellen Promotoren sind, in Wasser oder in einer Wasser/Lösungsmittel-Mischung erhalten wird;

- Mischen der reduzierenden Lösung und der Lösung von Promotoren bis eine Lösung A erhalten wird;

- Herstellen einer oxidierenden Lösung, welche durch Auflösen stark oxidierender chemischer Verbindungen in Wasser erhalten wird;

- Herstellen einer alkalischen Lösung, welche durch Auflösen eines alkalischen Agens (anorganische und organische Basen) in Wasser erhalten wird;

- Mischen der oxidierenden Lösung mit der alkalischen Lösung bis eine neue Lösung, definiert als Lösung B, mit einem pH-Wert > 7 und einem Oxidationspotenzial E > +0,80 V erhalten wird;

- Zutropfen der Lösung A zur Lösung B unter Rühren, wobei der pH-Wert und das Oxidationspotenzial der Lösung B und die Zugaberate der reduzierenden Lösung konstant gehalten wird;

- Altern und Verdicken des sich bildenden Präzipitats und an-schließendes Entfernen des Präzipitats aus der Lösung durch Filtration;

- Waschen des Filtrats und anschließendes Trocknen;

- schließlich Konsolidieren der Strukturen der Präzipitate und Zersetzen etwaiger Salze/Hydroxide/Carbonate/Hydroxycarbonate durch eine thermische Behandlung.

**13.** Verfahren zur Herstellung eines nanostrukturierten Kompositmaterials auf der Basis von Zusammensetzungen von Mangan und Cer wie in den Ansprüchen 1 bis 11 definiert, **dadurch gekennzeichnet, dass** es die folgenden Schritte umfasst:

- Herstellen einer reduzierenden Lösung, die durch Auflösen von Salzen und löslichen Verbindungen von zweiwertigem Mangan (Mn$^{II}$), dreiwertigem Cer (Ce$^{III}$) und anderen metallischen Elementen (Me), welche zur Bildung von Redoxpaaren in der Lage sind, in Wasser oder in einer Wasser/Lösungsmittel-Mischung erhalten wird, mit einem pH-Wert im Bereich zwischen 4 und 5 und einem hohen Reduktionspotenzial E < 0,70 V;

- Herstellen einer Lösung A', d.h. einer oxidierenden Lösung, welche durch Auflösen stark oxidierender chemischer Verbindungen in Wasser erhalten wird;

- Tropfen von Lösung A' in die reduzierende Lösung unter Rühren, wobei der pH-Wert und das Oxidationspotenzial der reduzierenden Lösung und die Zugaberate der Lösung A' konstant gehalten wird;

- Altern und Verdicken des sich bildenden Präzipitats und anschließende Entfernung des Präzipitats aus der Lösung durch Filtration;

- Waschen des Filtrats und anschließendes Trocknen;

- schließlich Konsolidieren der Strukturen der Präzipitate und Zersetzung etwaiger Salze/Hydroxide/Carbonate/Hydroxycarbonate durch eine thermische Behandlung,

und welches vorzugsweise zusätzlich die folgenden Schritte umfasst, die den Mischschritten vorangehen:

- Herstellen einer Lösung von Promotoren, welche durch Auflösen von Salzen und löslichen Verbindungen, die Vorläufer von elektronischen/strukturellen Promotoren sind, in Wasser oder in einer Wasser/Lösungsmittel-Mischung erhalten wird;

- Mischen der oxidierenden Lösung und der Lösung von Promotoren bis eine modifizierte Lösung A' erhalten wird;

wobei die restlichen Schritte unverändert bleiben.

**14.** Verwendung eines nanostrukturierten Kompositmaterials auf der Basis von Zusammensetzungen von Mangan und Cer wie in den Ansprüchen 1 bis 11 definiert zur Entfernung von Schadstoffen, welche in flüssigen Phasen oder Gasphasen vorliegen, durch Adsorption und Oxidation.

**15.** Verwendung eines nanostrukturierten Kompositmaterials auf der Basis von Zusammensetzungen von Mangan und Cer wie in den Ansprüchen 1 bis 11 definiert bei der Adsorption von Schwermetallen, Cyaniden, Schwefelverbindungen und verschiedenen Klassen industrieller organischer Verbindungen, wie zum Beispiel Pigmenten und Farbstoffen, Polymeren (PEG), Phenolen, Alkoholen, Aldehyden und Ketonen, Ethern, Estern und Carbonsäuren.

16. Verwendung eines nanostrukturierten Kompositmaterials auf der Basis von Zusammensetzungen von Mangan und Cer wie in den Ansprüchen 1 bis 11 definiert bei der Oxidation von Cyaniden und verschiedenen Klassen industrieller organischer Verbindungen, wie zum Beispiel Pigmenten und Farbstoffen, Polymeren (PEG), Phenolen, Alkoholen, Aldehyden und Ketonen, Ethern, Estern und Carbonsäuren, mit Luft/Sauerstoff und bei niedriger Temperatur (60-160°C).

17. Verwendung eines nanostrukturierten Kompositmaterials auf der Basis von Zusammensetzungen von Mangan und Cer wie in den Ansprüchen 1 bis 11 definiert im Umweltbereich, als adsorbierender Filter und Oxidationskatalysator, für die Entfernung bei niedriger Temperatur (60-160°C) von Schadstoffmolekülen, wie zum Beispiel Schwermetallen, Cyaniden, Schwefelverbindungen, Pigmenten, Farbstoffen, Polymeren (PEG), Phenolen, Alkoholen, Aldehyden und Ketonen, Ethern, Estern und Carbonsäuren, welche sowohl in kontaminiertem Wasser als auch in Gasströmen vorliegen.

18. Verwendung eines nanostrukturierten Kompositmaterials auf der Basis von Zusammensetzungen von Mangan und Cer wie in den Ansprüchen 1 bis 11 definiert als Oxidationskatalysator in Festbettreaktoren (Rohrreaktor (PFR), Rieselbettreaktor (TBR), Blasensäulenreaktor (PEC)), oder Fließbettreaktoren (Dreiphasen-Fließbett (TPFB), Aufschlämmungsblasensäule (SBL)).

19. Verwendung eines nanostrukturierten Kompositmaterials auf der Basis von Zusammensetzungen von Mangan und Cer wie in den Ansprüchen 1 bis 11 definiert zur Entfernung von Schadstoffen, wie zum Beispiel Cyaniden, Schwefelverbindungen, Pigmenten, Farbstoffen, Polymeren (PEG), Phenolen, Alkoholen, Aldehyden und Ketonen, Ethern, Estern und Carbonsäuren, welche sowohl in kontaminiertem Wasser oder Prozesswasser als auch in Gasströmen vorliegen.

20. Verfahren zur Entfernung von Schadstoffen mit Hilfe eines nanostrukturierten Kompositmaterials auf der Basis von Zusammensetzungen von Mangan und Cer wie in den Ansprüchen 1 bis 11 definiert, umfassend eine zweistufige Behandlung, wobei das Kompositmaterial die zweifache Rolle eines adsorbierenden Filters und eines Oxidationskatalysators innehat und in einer kombinierten und alternierenden Weise eingesetzt wird, und wobei die zweistufige Behandlung vorzugsweise nacheinander umfasst:

   - einen ersten Schritt, in dem Schadstoffmoleküle, die in Wasser oder Gasströmen vorliegen, auf Filtern des Kompositmaterials bis zu deren Sättigung bei niedriger Temperatur (< 60°C) zurückgehalten/entfernt werden, und
   - einen zweiten Schritt der Oxidation der auf dem Kompositmaterial adsorbierten Schadstoffe, wobei vorgewärmte Luft eingesetzt wird, zur Regeneration des Filters.

## Revendications

1. Matériau composite nanostructuré à base de compositions de manganèse et de cérium, composé de nanosphères composites agrégées, ayant une taille allant de 1 à 40 nm, de nanoparticules cristallines ultrafines composées d'un ou de plusieurs composés de cérium, dispersées dans un mélange solide métastable contenant un ou plusieurs oxydes sous-stoechiométriques de manganèse, **caractérisé en ce que** lesdits oxydes sous-stoechiométriques de manganèse comprennent des manganates MeMnOZ, dans lesquels $1 \leq z \leq 4$, Me étant constitué d'un ou de plusieurs éléments choisis parmi les métaux alcalins, les métaux alcalino-terreux, les métaux de transition et les terres rares, à l'exception de Mn.

2. Matériau composite selon la revendication 1, **caractérisé en ce que** lesdits manganates comprennent du manganèse bivalent (MnII), du manganèse trivalent (MnIII), du manganèse tétravalent (MnIV), du manganèse hexavalent (MnVI) et du manganèse heptavalent (MnVII) ou des mélanges de ceux-ci, de préférence en une quantité d'au moins 25 % et d'au plus 75 % du poids total du matériau et de manière préférée entre toutes en une quantité comprise dans la plage allant de 45 à 55 % du poids total du matériau.

3. Matériau composite selon l'une quelconque des revendications précédentes, **caractérisé en ce que** Me est choisi parmi Ce, V, Ti, Cr, Fe, Cu, Zn, Sn, Ga, Gd, Y, Zr, Al, Si, La, K, Li, Pb, Cs, ou un mélange de ceux-ci, de préférence parmi Ti, Zr, Ce ou un mélange de ceux-ci et de manière préférée entre toutes est Ce.

4. Matériau composite selon l'une quelconque des revendications précédentes, **caractérisé en ce que** lesdits manganates sont présents en une quantité d'au moins 1 % et d'au plus 35 % du poids total du composé de manganèse et de préférence en une quantité comprise dans la plage allant de 10 à 15 % du poids total du composé de manganèse.

5. Matériau composite selon l'une quelconque des revendications précédentes, **caractérisé en ce que** lesdits composés de cérium sont des oxydes nanocristallins de type CeOx, dans lesquels $1,5 \leq x \leq 2,0$, ou des solutions solides de ceux-ci avec des éléments vicariants, sous la forme de particules cristallines ultrafines, ayant un diamètre de 1 à 10 nm.

6. Matériau composite selon la revendication 5, **caractérisé en ce que** lesdits oxydes nanocristallins de type CeOx sont présents en une quantité d'au moins 20 % et d'au plus 85 % du poids total du matériau et de préférence en une quantité comprise dans la plage allant de 50 à 60 % du poids total du matériau.

7. Matériau composite selon l'une quelconque des revendications précédentes, **caractérisé en ce que** lesdits composés de cérium comprennent des composés de cérium jouant le rôle de promoteurs électroniques/ structurels, choisis parmi les oxydes (CeO2 ; Ce2O3), le peroxyde cérique (Ce-H2O-O2), le fluorure cérique (CeF4), le sulfate cérique [Ce(SO4)2], le nitrate d'ammonium cérique [(NH4)2Ce(NO3)6], le sulfate d'ammonium cérique [(NH4)2Ce(SO4)3], l'ammonium cérique hexa-chloré [(NH4)2CeCl6], le peroxyde céreux (Ce-H2O-H2O2), le carbonate basique céreux [CeOHCO3], l'hydroxyde céreux [Ce(OH)3], le carbonate céreux [Ce2(CO3)3.nH2O], l'oxy-carbonate céreux [Ce2O2(CO3)], le phosphate céreux [CePO4.H2O], le fluorure céreux [CeF3], l'oxyfluorure céreux [CeOF], le sulfate céreux [Ce2(SO4)3], le sulfure céreux [Ce2S3], l'oxysulfure céreux [Ce2O2S], le nitrate céreux [Ce(NO3)3.6H2O], le chlorure céreux [CeCl3], l'oxychlorure céreux [CeOCl], le bromure céreux [CeBr3] ou leurs mélanges, de préférence en une quantité comprise dans la plage allant de 2 à 40 % du poids total du matériau et de manière préférée entre toutes en une quantité comprise dans la plage allant de 10 à 20 % du poids total du matériau.

8. Matériau composite selon l'une quelconque des revendications précédentes, **caractérisé en ce qu'**il comprend en outre un promoteur électronique/structurel choisi parmi l'alumine, la silice, l'oxyde de titane, l'oxyde de germanium, la zircone, les aluminosilicates, les zirconyl-silicates, les oxydes de chrome, les oxydes de cuivre, les oxydes de molybdène, les oxydes de tantale, les oxydes de zinc, les oxydes d'yttrium, les oxydes de vanadium, les oxydes de fer et leurs mélanges.

9. Matériau composite selon l'une quelconque des revendications précédentes, **caractérisé en ce qu'**il présente une structure mésoporeuse, avec des pores ayant un diamètre compris entre 5 et 50 nm, dans lequel de préférence 80 % des diamètres des pores présentent des valeurs d'écart-type relatif (ETR) inférieures à 0,2.

10. Matériau composite selon l'une quelconque des revendications précédentes, **caractérisé en ce qu'**il présente une concentration plus élevée en ions de manganèse dans les couches de surface que dans les couches internes, les valeurs du rapport atomique du manganèse sur la surface par rapport aux couches internes variant entre 1,1 et 1,5.

11. Matériau composite selon l'une quelconque des revendications précédentes, **caractérisé en ce qu'**il présente une densité superficielle élevée de sites rédox et de sites acidobasiques, avec des valeurs qui sont supérieures à 1,0 $\mu$mole/m2.

12. Procédé de production d'un matériau composite nanostructuré à base de compositions de manganèse et de cérium tel que défini dans les revendications 1 à 11, **caractérisé en ce qu'**il comprend les étapes suivantes :

- la préparation d'une solution réductrice obtenue par la dissolution, dans de l'eau ou dans un mélange eau/solvant, de sels et de composés solubles de manganèse divalent (MnII), de cérium trivalent (CeIII) et d'autres éléments métalliques (Me) capables de générer des couples rédox ;
- la préparation d'une solution de promoteurs, obtenue par la dissolution, dans de l'eau ou dans un mélange eau/solvant, de sels et de composés solubles qui sont des précurseurs de promoteurs électroniques/ structurels ;
- le mélange de ladite solution réductrice et de ladite solution de promoteurs, jusqu'à l'obtention d'une solution A;
- la préparation d'une solution oxydante, obtenue par la dissolution de composés chimiques oxydants puissants dans de l'eau ;
- la préparation d'une solution alcaline, obtenue par la dissolution d'un agent alcalin (bases inorganiques et organiques) dans de l'eau ;
- le mélange de la solution oxydante avec la solution alcaline, jusqu'à l'obtention d'une nouvelle solution appelée solution B, ayant un pH > 7 et un potentiel d'oxydation E > + 0,80 V ;
- l'ajout goutte-à-goutte de la solution A à la solution B, sous agitation, en maintenant constants le pH et le potentiel d'oxydation de la solution B et la vitesse d'administration de la solution réductrice ;
- le vieillissement et l'épaississement du précipité en formation, puis le retrait par filtration du précipité de la solution ;
- le lavage du filtrat puis la mise en oeuvre d'un séchage ;
- la consolidation finale des structures des précipités et la décomposition des sels/hydroxydes/carbonates/ hydroxy-carbonates par traitement thermique.

13. Procédé de production d'un matériau composite nanostructuré à base de compositions de manganèse et de cérium tel que défini dans les revendications 1 à 11, **caractérisé en ce qu'**il comprend les étapes suivantes :

- la préparation d'une solution réductrice obtenue par la dissolution, dans de l'eau ou dans un mélange eau/solvant, de sels et de composés solubles de manganèse divalent (MnII), de cérium trivalent (CeIII) et d'autres éléments métalliques (Me) capables de générer des couples rédox, ayant un pH compris entre 4 et 5 et un potentiel de réduction élevé E < 0,70 V ;
- la préparation d'une solution A', c'est-à-dire une solution oxydante, obtenue par la dissolution de composés chimiques oxydants puissants dans de l'eau ;
- l'ajout goutte-à-goutte de la solution A' à la solution réductrice, sous agitation, en maintenant constants le pH et le potentiel d'oxydation de la solution réductrice et la vitesse d'administration de la solution A' ;
- le vieillissement et l'épaississement du précipité en formation, puis le retrait par filtration du précipité de la solution ;
- le lavage du filtrat puis la mise en oeuvre d'un séchage ;
- la consolidation finale des structures des précipités et la décomposition des sels/hydroxydes/carbonates/hydroxy-carbonates par traitement thermique et de préférence comprend en outre les étapes suivantes, avant les étapes de mélange :
- la préparation d'une solution de promoteurs, obtenue par la dissolution, dans de l'eau ou dans un mélange eau/solvant, de sels et de composés solubles qui sont des précurseurs de promoteurs électroniques/ structurels ;
- le mélange de ladite solution oxydante et de ladite solution de promoteurs, jusqu'à l'obtention d'une solution A' modifiée ;

les étapes restantes étant inchangées.

14. Utilisation d'un matériau composite nanostructuré à base de compositions de manganèse et de cérium tel que défini dans les revendications 1 à 11, dans l'élimination des polluants qui sont présents dans les phases liquides ou gazeuses, par adsorption et oxydation.

15. Utilisation d'un matériau composite nanostructuré à base de compositions de manganèse et de cérium tel que défini dans les revendications 1 à 11, dans l'adsorption des métaux lourds, des cyanures, des composés soufrés et de diverses classes de composés organiques industriels tels que : les pigments et les colorants, les polymères (PEG), les phénols, les alcools, les aldéhydes et les cétones, les éthers, les esters et les acides carboxyliques.

16. Utilisation d'un matériau composite nanostructuré à base de compositions de manganèse et de cérium tel que défini dans les revendications 1 à 11, dans l'oxydation avec de l'air/oxygène et à basse température (60 à 160°C) des cyanures et de diverses classes de composés organiques industriels tels que les pigments et les colorants, les polymères (PEG), les phénols, les alcools, les aldéhydes et les cétones, les éthers, les esters et les acides carboxyliques.

17. Utilisation d'un matériau composite nanostructuré à base de compositions de manganèse et de cérium tel que défini dans les revendications 1 à 11 dans le domaine environnemental, comme filtre adsorbant et catalyseur d'oxydation, pour l'élimination à basse température (60 à 160°C) de molécules de polluants tels que les métaux lourds, les cyanures, les composés soufrés, les pigments, les colorants, les polymères (PEG), les phénols, les alcools, les aldéhydes et les cétones, les éthers, les esters et les acides carboxyliques qui sont présents à la fois dans de l'eau contaminée et dans des courants gazeux.

18. Utilisation d'un matériau composite nanostructuré à base de compositions de manganèse et de cérium tel que défini dans les revendications 1 à 11 comme catalyseur d'oxydation dans des réacteurs à lits fixes (réacteur à écoulement piston (PFR), réacteur à lit ruisselant (TBR), colonne garnie à bulles (PEC)) ou des réacteurs à lit fluidisé (lit fluidisé triphasique (TPFB), colonne à bulles à suspension(SBL)).

**19.** Utilisation d'un matériau composite nanostructuré à base de compositions de manganèse et de cérium tel que défini dans les revendications 1 à 11 dans l'élimination des polluants tels que les cyanures, les composés soufrés, les pigments, les colorants, les polymères (PEG), les phénols, les alcools, les aldéhydes et les cétones, les éthers, les esters et les acides carboxyliques, qui sont présents à la fois dans les eaux industrielles ou contaminées et dans les courants gazeux.

**20.** Procédé d'élimination de polluants au moyen d'un matériau composite nanostructuré à base de compositions de manganèse et de cérium tel que défini dans les revendications 1 à 11, comprenant un traitement à deux étapes dans lequel le matériau composite joue le double rôle de filtre adsorbant et de catalyseur d'oxydation, et fonctionne d'une manière combinée et alternée et de préférence ledit traitement à deux étapes comprend, successivement :

- une première étape dans laquelle les molécules polluantes qui sont présentes dans l'eau ou des courants gazeux sont retenues/éliminées à basse température (< 60 °C) sur des filtres dudit matériau composite jusqu'à leur saturation, et
- une seconde étape d'oxydation des polluants adsorbés sur ledit matériau composite, mise en oeuvre avec de l'air préchauffé, pour la régénération du filtre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 200145833 A
- US 20030166987 A
- US 20040192947 A
- WO 2007069238 A

### Non-patent literature cited in the description

- *Catalysis Today,* 1999, vol. 53, 81
- *Ind. Eng. Chem. Res.,* 1988, vol. 27, 718
- *Chem. Eng. Journal,* 1999, vol. 73, 149
- *Ind. Eng. Chem. Res.,* 1998, vol. 37, 309
- **IMAMURA et al.** *Ind. Eng. Chem. Res.,* 1999, vol. 38, 1743
- **HOCEVAR et al.** *Journal of Catalysis,* 1999, vol. 184, 39
- **HOCEVAR et al.** *Applied Catalysis, B: Environmental,* 2000, vol. 28, 113
- **ARENA et al.** *Applied Catalysis, B: Environmental,* 2003, vol. 45, 51
- **SANTOS et al.** *Environmental Science and Technology,* 2004, vol. 38, 133
- *Ind. Eng. Chem. Res.,* 2004, vol. 43, 5089
- **IMAMURA et al.** *Ind. Eng. Chem. Prod. Res. Dev.,* 1985, vol. 24, 75
- **LARACHI.** *Topics in Catalysis,* 2005, vol. 33 (1-4), 109-134
- Optimization of the MnCeOx system for the catalytic wet oxidation of phenol with oxygen (CWAO). **ARENA et al.** Applied Catalysis B: Environmental. Elsevier, 17 December 2008, vol. 85, 40-47
- **ARENA et al.** Basic evidence of the molecular dispersion of MnCeOx catalysts sybthetized via a novel "redox precipitation" route. *Chem. Mater.,* 03 February 2007, vol. 19, 2269-2276
- *Ind. Eng. Chem. Res.,* 2007, vol. 46, 6724
- Synthesis of highly dispersed MnCeOx catalysts via a novel "redox precipitation" route. Materials Research Bulletin. Elsevier, 30 January 2008, vol. 43, 539-545
- **ARENA et al.** Nanosize effects, Physiochemical properties and catalytic oxidation patterns of the redox-precipitated MnCeOx system. *Journal of Physical Chemistry C,* 26 January 2009, vol. 113, 2822-2829
- **S. OTLES et al.** *Powder Technology,* 2011, vol. 208, 378-382
- **Y. OUABBAS et al.** *Powder Technology,* 2009, vol. 190, 200-209
- *J. Phys. Chem. C,* 2010, vol. 114, 12909-12919
- **CHEN et al.** *Appl. Catalysis.B: Environmental,* 2001, vol. 32, 195
- *Appl. Catalysis. B: Environmental,* 2001, vol. 32, 195
- *Topics Catal.,* 2005, vol. 33, 77